# EUROPEAN PATENT APPLICATION

(11) **EP 1 427 211 A1**
(43) Date of publication of application: **09.06.2004**
(21) Application number: 02741271.7
(22) Date of filing: 24.06.2002
(51) Int. Cl.: H04N 7/173

(54) **MULTIMEDIA INFORMATION COMMUNICATION SERVICE SYSTEM, USER TERMINAL PROGRAM, AND RECORDING MEDIUM**

(30) Priority: 25.06.2001 JP 2001192061
(71) Applicant: Nova Co., Ltd., Osaka-shi, Osaka 542-0086 (JP)
(72) Inventor: SARUHASHI, Nozomu, Osaka-shi, Osaka 542-0086 (JP); UEMURA, Masahide, Osaka-shi, Osaka 542-0086 (JP); SHIMAMOTO, Katsunori, Osaka-shi, Osaka 542-0086 (JP); YASUMI, Yu, Osaka-shi, Osaka 542-0086 (JP)
(74) Representative: Schoppe, Fritz, Dipl.-Ing.
(86) International application number: PCT/JP2002/006301
(87) International publication number: WO 2003/001808

(57) **Abstract**

A sophisticated information communication service system in which multimedia contents such as moving images, still images, and text are registered in advance and are fetched when required with holding bidirectional conversation functions using multimedia information including TV pictures and sounds for providing conferences, education, medical care, nursing care, various consultations, and the like. The information communication service system comprises: a bidirectional communication server (10) for conducting bidirectional multimedia communication; a contents management server (12) for storing multimedia contents; and a contents delivery server (14) for delivering the contents stored in the contents management server to user terminals. The contents management server has a contents archiver (16) storing material contents, and performs delivery based on a scenario which defines a combination of material contents along the time axis. The bidirectional communication server also has a data conference function and a chat function. A resource management function and an accounting function are also provided.

## Description

### TECHNICAL FIELD

This invention relates to a multimedia information communication service system for providing interactive information communication services such as conferences, education, medical care, nursing care, and various consultations through the use of multimedia information including images and sounds.

### BACKGROUND ART

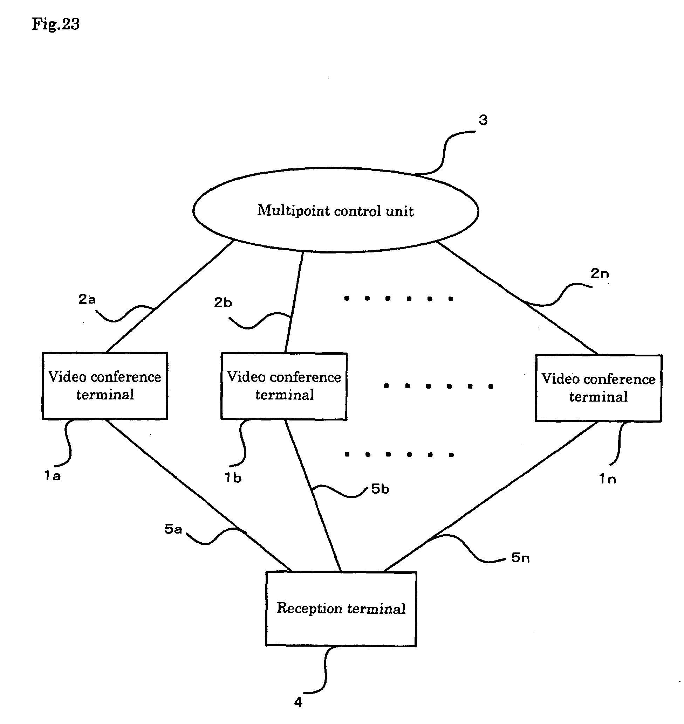

Among conventional information communication service systems is a video conference system as shown in Fig. 23. In the diagram: the reference numerals 1a, 1b, ..., 1n represent video conference terminals; 2a, 2b, ..., 2n, and 5a, 5b, ..., 5n communication lines; 3 a multipoint control unit for multipoint communications, which connects the plurality of video conference terminals over the communication lines; and 4 a reception terminal for conference reception. Each of the video conference terminals comprises a display for displaying images, a TV camera for capturing images, a headphone set including a microphone for capturing voice and earphones for hearing, and a personal computer with a built-in TA (terminal adaptor). The video conference terminals are connected with the multipoint control unit 3 and the reception terminal 4 over the communication lines. In view of image communication, ISDN-based telephone lines and/or dedicated lines are used as the communication lines.

For information communication services using this video conference system, users first call the center where the reception terminal is, and place their orders for the services. If the reception terminal confirms that the callers are predetermined users, it connects the video conference terminals of the users with the multipoint control unit. This enables the individual users to conduct bidirectional communications using images and sounds, making conference, education, and other services available to even those at geographically remote locations.

In order to handle situations with three or more users, the multipoint control unit has the function of synthesizing the images of the connected video conference terminals for split display. Consequently, a plurality of users can be provided with an identical service at the same time.

Nevertheless, such conventional video conference systems are chiefly intended for face-to-face conversations between remote locations, and are hardly adequate to sophisticated applications such as conferences, education, medical care, nursing care, and various consultations that are performed through the full use of a variety of multimedia contents stored in advance, including moving images, still images, and text.

In view of the foregoing, it is a principle object of the present invention to provide sophisticated information communication services in which multimedia contents such as moving images, still images, and text are registered in advance and are fetched when required with holding bidirectional conversation using multimedia information including TV pictures and sounds for performing conferences, education, medical care, nursing care, various consultations, and the like.

### DISCLOSURE OF THE INVENTION

A multimedia information communication service system according to the present invention comprises: bidirectional communication means for providing, between user terminals, a bidirectional communication function using multimedia information including TV pictures and sounds; contents management means for storing multimedia contents to be delivered to the user terminals; and contents delivery means for delivering the contents stored in the contents management means to the user terminals.

In the multimedia information communication service system according to the present invention, the contents management means may include material contents storing means for storing materials of the contents to be delivered, or material contents, and scenario storing means for storing a scenario defining a combination of the material contents along time axis. Here, the contents delivery means fetches and delivers the material contents stored in the material contents storing means based on the scenario stored in the scenario storing means.

This facilitates providing a sophisticated presentation using a plurality of contents in combination.

In the multimedia information communication service system according to the present invention, the bidirectional communication means may have the function of synthesizing the multimedia information transmitted from the plurality of user terminals and delivering the resultant to the user terminals.

This eliminates the need for the user terminals to receive and display the multimedia information of the individual user terminals separately, thus reducing the load on the user terminals.

In the multimedia information communication service system according to the present invention, the bidirectional communication means may have the function of delivering the multimedia information transmitted from the plurality of user terminals to user terminals other than the sources thereof separately.

This prevents the user terminals from receiving their own images delivered back, thereby reducing the load on the network. Besides, since the user terminals receive and display the multimedia information of the individual user terminals separately, they improve in the flexibility of screen display and sound output on the user terminals.

In the multimedia information communication service system according to the present invention, the bidirectional communication means may have the function by which the configuration of screens to be displayed on the user terminals is controlled from a certain user terminal.

Consequently, the certain user terminal can be used as a chairperson terminal for effective services. For example, in a conference service, a chairperson can modify the configuration of screens to display in accordance with the proceeding. In an education service, an instructor can modify the configuration of screens to display in accordance with the mode of communication.

In the multimedia information communication service system according to the present invention, the bidirectional communication means may have the function by which the allocation of sounds of the respective users to be output on the user terminals is controlled from a certain user terminal.

Consequently, the certain user terminal can be used as a chairperson terminal for effective services. For example, in a conference service, a chairperson can modify the allocation of the attendants' voices in accordance with the proceeding. In an education service, an instructor can modify the allocation of the voices of the instructor and individual students in accordance with the mode of communication.

In the multimedia information communication service system according to the present invention, the bidirectional communication means may have the function of controlling the configuration of screens to be displayed on the user terminals based on the magnitude of sound data transmitted from the user terminals.

This enables such operations as highlighting the screens of speakers and automatically switching to the screens of speakers for effective services.

In the multimedia information communication service system according to the present invention, the bidirectional communication means may have a data conference function of sharing an application to be performed on the user terminals.

This allows sophisticated services in which the users use a certain application for cooperative work.

In the multimedia information communication service system according to the present invention, the bidirectional communication means may have a chat function of realizing bidirectional communications between the user terminals by means of text entry.

This enables text-based conversations between the users, making precision- and recordability-requiring services available.

In the multimedia information communication service system according to the present invention, the bidirectional communication means may have the function of modifying a quality of information to transmit in accordance with a communication band of the network.

Consequently, even when the communication band of the network is limited, the bidirectional communication function having quality corresponding to the communication band can be maintained for optimum services.

In the multimedia information communication service system according to the present invention, the contents delivery means may have the function of controlling contents replay from the user terminals.

Consequently, contents replay can be controlled from the user terminals in accordance with the progress of service, thereby allowing various modes of services.

In the multimedia information communication service system according to the present invention, the contents delivery means may have picture and sound link means, and have the function for a live link of pictures and sounds.

Consequently, real-time pictures and sounds from other than the user terminals can be used to provide such services as conferences and education with field coverage.

In the multimedia information communication service system according to the present invention, the contents delivery means may have the function of modifying a quality of information to transmit in accordance with a communication band of the network.

Consequently, even when the communication band is limited, the contents delivery function having quality corresponding to the communication band can be maintained for optimum services.

The multimedia information communication service system according to the present invention may further comprise resource management means for managing availability of the bidirectional communication means and connections of the user terminals.

This facilitates determining service availability, thereby allowing more efficient service reception and automated service reservation.

The multimedia information communication service system according to the present invention may further comprise accounting means for calculating service charges for users, the accounting means having the function of summarizing connect times of the user terminals used by the users and conducting charging.

It is therefore possible to summarize charges separately even if the connect times vary user by user.

The multimedia information communication service system according to the present invention may further comprise accounting means for calculating service charges for users, the accounting means having the function of summarizing connect time of a user terminal used by predetermined one other than the users and conducting charging.

This enables charging corresponding to the time of service, for example, by an instructor in an education service, by a doctor in a medical service, by a lawyer in a legal consultation service, etc.

The multimedia information communication service system according to the present invention may further comprise accounting means for calculating service charges for users, the accounting means having the function of acquiring predetermined charge information on contents to be provided by the contents delivery means and conducting charging.

This realizes charging corresponding to the contents delivered.

In the multimedia information communication service system according to the present invention, some or all of the user terminals may be connected over the Internet.

Consequently, users who have Internet-capable environment can participate in the service anytime.

A program for use on a user terminal of the multimedia information communication service system according to the present invention comprises: means for acquiring a TV picture and sound of the user terminal; means for transmitting the TV picture and sound acquired; means for receiving TV pictures and sounds from the bidirectional communication means; means for receiving multimedia contents from the contents delivery means; and means for creating a predetermined window to output the received TV pictures and sounds and the received multimedia contents.

A computer-readable recording medium according to the present invention contains the program for use on a user terminal of the multimedia information communication service system.

The foregoing and other objects, features, and advantages of the present invention will become more apparent from the following detailed description of an embodiment of the invention when read with reference to the drawings.

### BRIEF DESCRIPTION OF THE DRAWINGS

Fig. 1 is a block diagram showing an information communication service center according to an embodiment of the present invention;
Fig. 2 is a conceptual diagram showing a video conference function according to the embodiment of the present invention;
Fig. 3 is a diagram showing the procedure for the video conference function according to the embodiment of the present invention;
Fig. 4 is a conceptual diagram showing a data conference function according to the embodiment of the present invention;
Fig. 5 is a conceptual diagram showing a contents delivery function according to the embodiment of the present invention;
Fig. 6 is a conceptual diagram showing the method of expressing delivery contents in a scenario;
Fig. 7 is a chart showing an example of a scenario for use in the contents delivery of the present invention;
Fig. 8 is a diagram showing the procedure for scenario-based contents delivery;
Fig. 9 is a diagram showing the procedure for operation control on contents under delivery;
Fig. 10 is a conceptual diagram showing a live link function according to the embodiment of the present invention;
Fig. 11 is a diagram showing a contents management database for automatic scenario creation;
Fig. 12 is a diagram showing a sample of description in a scenario dictionary;
Fig. 13 is a diagram showing the procedure for automatic scenario creation;
Fig. 14 is a diagram showing an example of screen display for situations where the conversation function by the bidirectional communication server is effected;
Fig. 15 is a diagram showing an example of screen display for the case of contents delivery by the contents delivery server;
Fig. 16 is a diagram showing an example of screen display for situations where a conversation is held with contents delivery;
Fig. 17 is a chart showing examples of service configuration patterns for combining face-to-face services and automatic services;
Fig. 18 is a chart showing examples of combination of a plurality of services to be taken charge of by a single instructor;
Fig. 19 is a diagram showing an example of a membership information entry screen;
Fig. 20 is a diagram showing the procedure for the authentication and accounting function according to the embodiment of the present invention;
Fig. 21 is a diagram showing an example of a bonus score inquiry screen;
Fig. 22 is a diagram showing an example of a karte entry screen; and
Fig. 23 is a block diagram showing a conventional information communication service system.

### BEST MODE FOR CARRYING OUT THE INVENTION

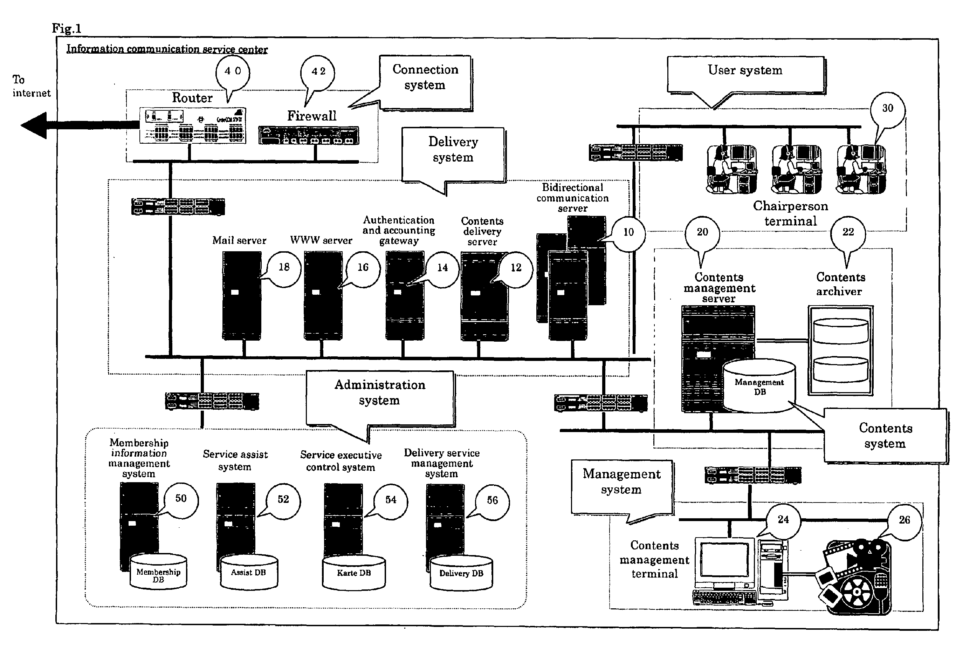

Fig. 1 is a block diagram showing an information communication service center according to an embodiment of the multimedia information communication service system using communication lines according to the present invention. As shown in the diagram, the center is network-connected with the following subsystems: delivery system, contents system, user system, connection system, and administration system.

The delivery system includes a bidirectional communication server 10, a contents delivery server 12, an authentication and accounting gateway 14, a WWW server 16, and a mail server 18. The bidirectional communication server 10 provides bidirectional communication functions among a plurality of user terminals, using multimedia including TV pictures and sounds. The contents delivery server 12 delivers contents to the user terminals. The authentication and accounting gateway 14 exercises authentication and accounting management in cooperation with administration system. The WWW server 16 delivers Web pages for use in authenticating users, selecting service menus, etc. The mail server 18 delivers various notifications, materials, and other mails to the users.

The contents system includes a contents management server 20, a contents archiver 22, a contents management terminal 24, and a picture and sound link unit 26. The contents management server 20 registers and stores multimedia contents such as moving images, still images, sounds, text, and sound effects. The contents archiver 22 contains material contents. The contents management terminal 24 is used to make registration and storing operations by the contents administrator. The picture and sound link unit 26 is intended to link live pictures and sounds.

The user system includes chairperson terminals 30 which are user terminals installed in the center and used chiefly by chairpersons. Each of the chairperson terminals 30 comprises a TV camera and a microphone for capturing the picture and voice of a chairperson, and a computer having an interface function intended for the TV camera and microphone and a network connection function. The chairperson terminals 30 have the function of transmitting the pictures and voices captured by the TV cameras and microphones, and the function of receiving multimedia information from the bidirectional communication server 10 and the contents delivery server 12 and outputting the same to screens and speakers. The chairperson terminals 30 also have the functions of selecting screen configuration and sound allocation on user terminals, and transmitting control signals intended to instruct operations for contents delivery etc. to the bidirectional communication server 10 and the contents delivery server 12.

The connection system includes a router 40 and a firewall 42. The router 40 is intended for Internet connection. The firewall 42 prevents unauthorized entry from exterior for the sake of system protection.

The administration system includes a membership information management system 50, a service assist system 52, a service executive control system 54, and a delivery service management system 56. The membership information management system 50 manages information on the members to be served. The service assist system 52 is intended for smooth service provision. The service executive control system 54 performs executive control on services. The delivery service management system 56 exercises centralized control on the mail delivery to the registered members.

Now, although not shown in the diagram, attendant terminals, or user terminals to be used by ordinary attendants, each comprise a TV camera and a microphone for capturing the picture and voice of the attendant, and a personal computer having an interface function intended for the TV camera and microphone and an Internet connection function. The attendant terminals can access the WWW server 16 in the center to receive information communication services provided by the center. It should be noted that the attendant terminals are basically the same as the foregoing chairperson terminals 30 in operation except that they are connected with the center over the Internet.

As employed in the following description, the "user terminals" refer to both the attendant terminals and the chairperson terminals 30.

Now, description will be given of the functions and the procedures to be provided by the center.

### [Bidirectional Communication Functions]

Initially, description will be given of bidirectional communication functions to be provided by the bidirectional communication server 10.

### 1. Video Conference Function

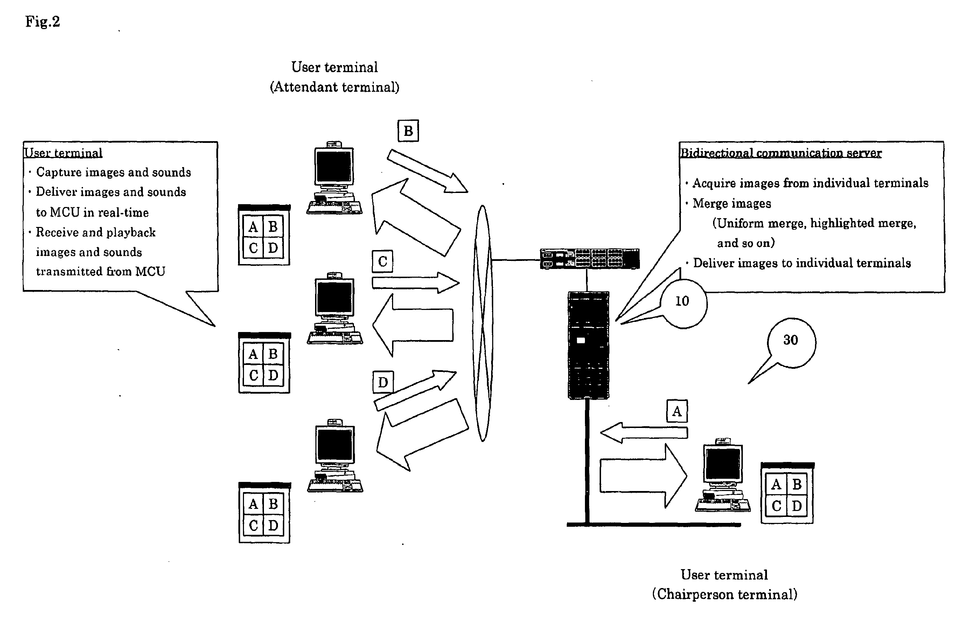

Fig. 2 is a conceptual diagram showing a video conference function to be provided by the bidirectional communication server 10. As shown in the diagram, the video conference function is to provide one-to-one, one-to-many, or many-to-many bidirectional communications using pictures and sounds captured by the TV cameras and microphones that are connected to the respective user terminals.

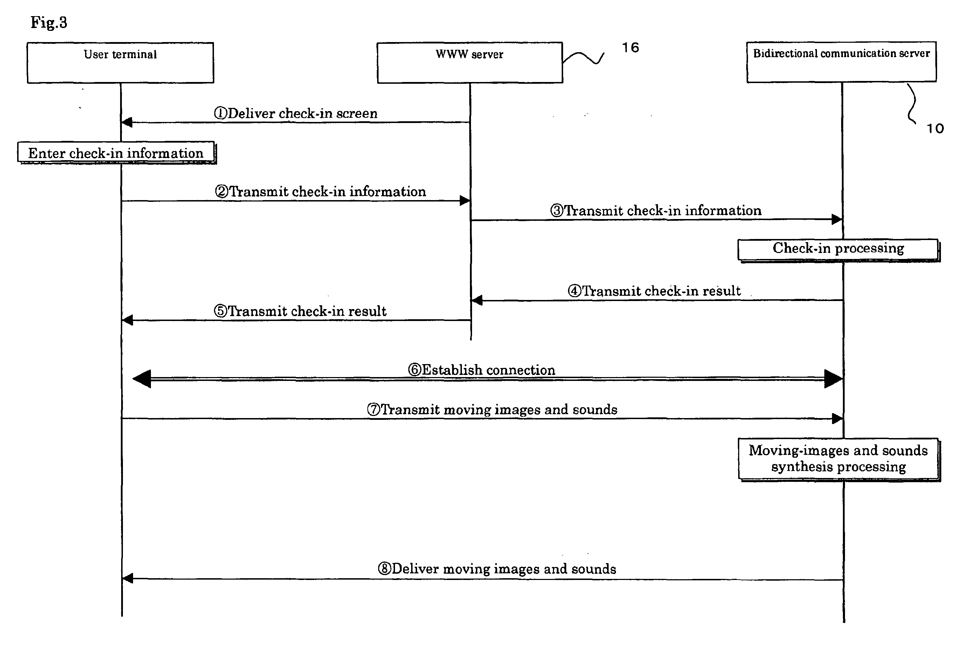

Fig. 3 shows the procedure for the video conference function. User terminals access the WWW server 16 to have a check-in screen delivered. Based on this, the users enter check-in information, and the user terminals transmit the check-in information to the bidirectional communication server 10 via the WWW server 16. Receiving the check-in information, the bidirectional communication server 10 performs check-in processing and returns the check-in results to the respective user terminals via the WWW server 16. This establishes connections. The individual user terminals capture pictures from the TV cameras and sounds from the microphones, and transmit the captured pictures and sounds to the bidirectional communication server 10 in real time. The bidirectional communication server 10 receives the pictures and sounds transmitted from the individual user terminals, synthesizes the received pictures and sounds into pictures and sounds to be delivered to the respective user terminals, and delivers the synthesized pictures and sounds to the user terminals. The individual user terminals receive the pictures and sounds delivered from the bidirectional communication server 10, create dedicated window on-screen to display the received pictures, and output the received sounds to their speakers.

The bidirectional communication server 10 thus provides a conversation function among the user terminals, using pictures and sounds. While the conversation function of the present system is of one-to-one or many-to-many in principle, one-to-many service is also available if settings are made at the time of check-in so as to preclude delivery of pictures and sounds other than those from a certain user terminal (for example, a chairperson terminal 30) in particular.

Buttons for specifying the mode of synthesis of pictures and sounds appear on the screen of the chairperson terminal 30. The chairperson can operate these buttons to transmit the information to the bidirectional communication server 10 so that a uniform merge for synthesizing the pictures and voices of the users uniformly and a highlighted merge for highlighting the pictures and voices of certain users is selected. For example, when a uniform merge is selected in a four-user conference, the screen is split into four equal sections while the TV pictures of the four are synthesized into a single screen and the sounds of the four are mixed evenly before delivery. When a highlighted merge is selected, the pictures and voices of designated users can be delivered selectively. Alternatively, the pictures and voices of the designated users can be made greater and the pictures and voices of the other users smaller before delivery.

Incidentally, the foregoing embodiment has dealt with the case where both the modes of synthesis of pictures and sounds are designated by a button operation from the chairperson terminal at the same time. Nevertheless, buttons for pictures and sounds may be provided separately to allow separate specification. In this case, for example, it is possible to check attendants' expressions in response to the voices of others.

In the foregoing embodiment, the bidirectional communication server 10 synthesizes pictures and sounds before delivery to the user terminals. Nevertheless, the pictures and sounds of user terminals may be delivered to other user terminals individually so that the respective user terminals create separate windows to display the received pictures along with their own pictures and replay sounds separately. In this case, the user terminals need not receive their own pictures and sounds delivered back. This can reduce the load on the communication lines. Besides, the users can arrange the screen configuration and sound allocation freely to their own tastes.

Here, the bidirectional communication server 10 may deliver picture and sound control commands from the chairperson terminal 30 to the individual user terminals so that the user terminals set the screen configuration and sound allocation based on the control signals.

In the foregoing embodiment, the chairperson terminal 30 alone is provided with the function of controlling the screen configuration and sound allocation on each user terminal. Nevertheless, the attendant terminals may also be given the function of controlling the screen configuration and sound allocation on each user terminal by the same method. Consequently, even in the absence of one who is in charge of the chairperson terminal 30, a chairperson can be selected from among the attendants. The bidirectional communication server 10 may be provided with a flag for granting the chairpersonship to a user terminal, so that control commands from the flagged user terminal are accepted. This makes services available using any one of the user terminals as the chairperson terminal.

Furthermore, the screen configuration of the respective user terminals may be controlled based on the magnitudes of sound transmitted from the individual user terminals. More specifically, for example, the magnitudes of the sound transmitted from the respective user terminals can be detected to achieve such screen-configuration control functions that the images of users beyond a certain level are highlighted, and that only the images of users beyond a certain level are displayed selectively. Here, the magnitudes of the sound may be determined in terms of instantaneous values or averages over a certain period of time.

In the case of the method where the bidirectional communication server 10 synthesizes the pictures and sounds of the individual user terminals before delivery to the user terminals, the bidirectional communication server 10 has only to detect the magnitudes of the sound information received from the respective user terminals and control the picture synthesis. On the other hand, with the method where the bidirectional communication server 10 delivers the pictures and sounds of the individual user terminals to the user terminals separately, the destination user terminals may detect the magnitudes of the sound information received from the individual user terminals and control screen configuration, or the bidirectional communication server 10 may detect the magnitudes of the sound received from the individual user terminals and deliver screen-configuration control signals to the user terminals so that the respective user terminals control the screen configuration based on the control signals.

Additional functions may also be provided including a voice control function of delaying image display and/or sound output slightly for automatic cue, and an anti-trip function of precluding control functions from being activated by speaker sounds.

The transmission of the pictures and sounds by the respective user terminals and the delivery of the pictures and sounds by the bidirectional communication server 10 may be modified in quality depending on the communication band of the network. To be more specific, there is provided the function of detecting the available communication band and lowering the frame rate of the pictures according to the communication band when the band is limited. Another function may be provided for lowering the sampling rate and the quantization bit rate of the sounds if the available communication band is narrow. The communication band may be detected by such means as packet exchange at the stage of negotiation prior to communication, or by sending packets for checking the communication band during communication. Consequently, even when the communication band of the network is limited, the bidirectional conversation functions having quality corresponding to the communication band can be maintained for optimum services.

### 2. Data Conference Function

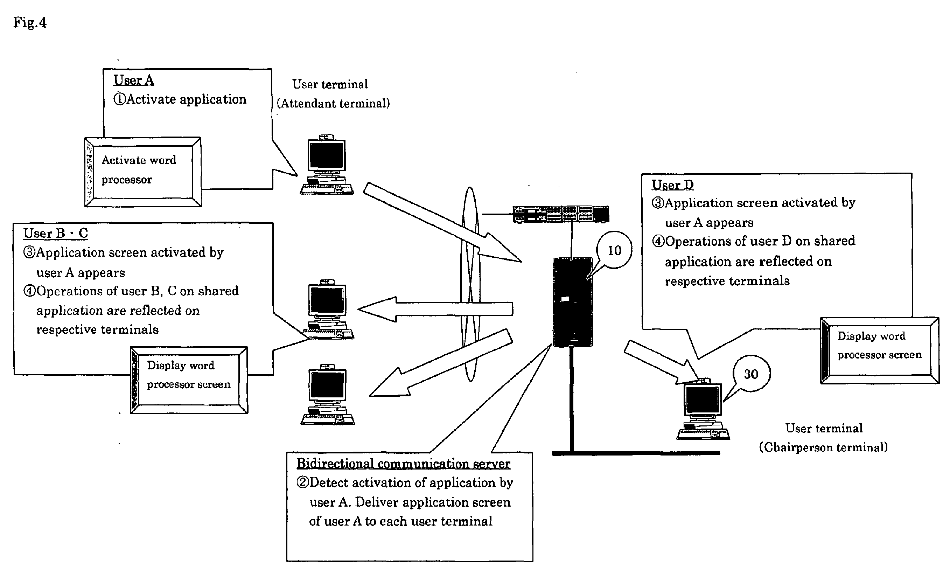

Fig. 4 is a conceptual diagram showing a data conference function to be provided by the bidirectional communication server 10. The data conference function enables application-based cooperative work by sharing applications installed on the individual user terminals or applications on WWW browsers.

For example, as shown in the diagram, when a shared application is activated on the terminal of user A, the terminal of user A transmits the activated shared application screen to the bidirectional communication server 10 successively. The bidirectional communication server 10 delivers the shared application screen from the terminal of user A to the terminals of other users B, C, and D. The terminals of users B, C, and D display the shared application screen delivered from the bidirectional communication server 10. This allows the terminals of users B, C, and D to operate the shared application. Operations are fed back to the terminal of user A via the bidirectional communication server 10. Sophisticated services can thus be provided since all the users can collaborate by using a word processor, spreadsheet, clip art, and other application programs. For example, it is possible to create a whiteboard on which drawings and characters can be written by mouse, and hold a discussion among all the members while writing on this whiteboard.

### 3. Chat Function

Description will now be given of a chat function to be provided by the bidirectional communication server 10. The chat function realizes one-to-one, one-to-many, or many-to-many bidirectional communication by means of text entries from the user terminals. When a chat program is activated on one of the user terminals, the information is posted to the other user terminals via the bidirectional communication server 10, and the chat screen also appears on the other user's display. When text is entered from any of the user terminals, the entered text is posted to the other user terminals via the bidirectional communication server 10, and the entered text is also displayed on the other user terminals. This enables text-based conversations between the users, making precision- and recordability-requiring services available.

Incidentally, the screen-configuration control function of the chairperson terminal 30 (or the chairpersonship-flagged user terminal or the like) described above may also include the function for controlling the screens of the data conference function and chat function in the same manner. This allows the chairperson or the other to exercise control for smooth multimedia bidirectional communication services allover.

### [Contents Delivery Function]

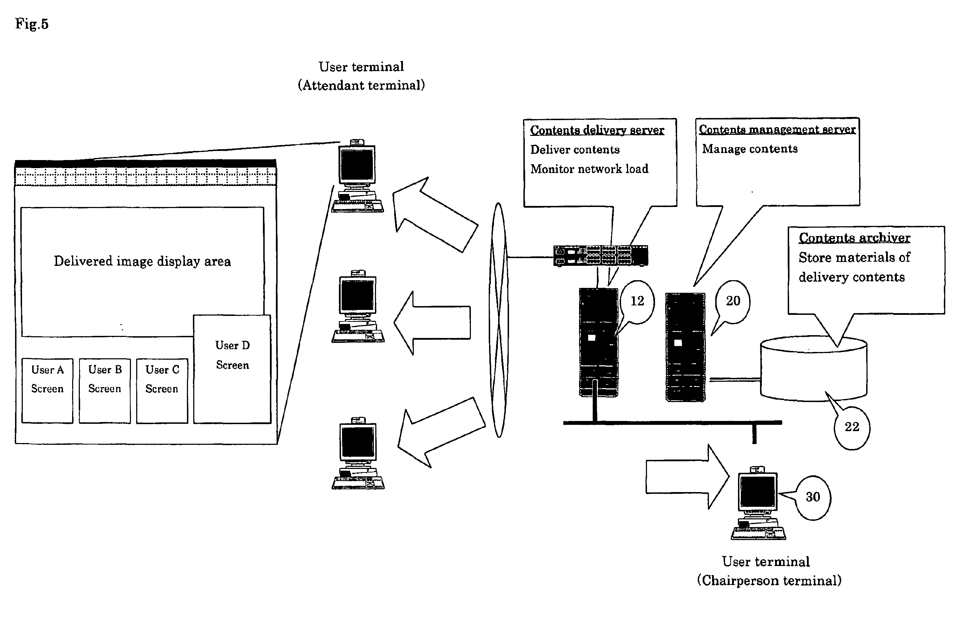

Next, description will be given of the functions and procedure for the contents delivery server 12 to provide. Fig. 5 is a conceptual diagram showing a contents delivery function to be provided by the information communication service system. With the contents delivery function, the contents delivery server 12 delivers, to the user terminals, multimedia contents such as moving images, still images, sounds, text, and application data that are recorded on the contents archiver 22 managed by the contents management server 20.

In the information communication service system of the present invention, the materials of the contents to be delivered, or material contents, are recorded on the contents archiver 22 and combined into contents for delivery. For this purpose, delivery contents are expressed in a scenario which defines a combination of material contents along the time axis.

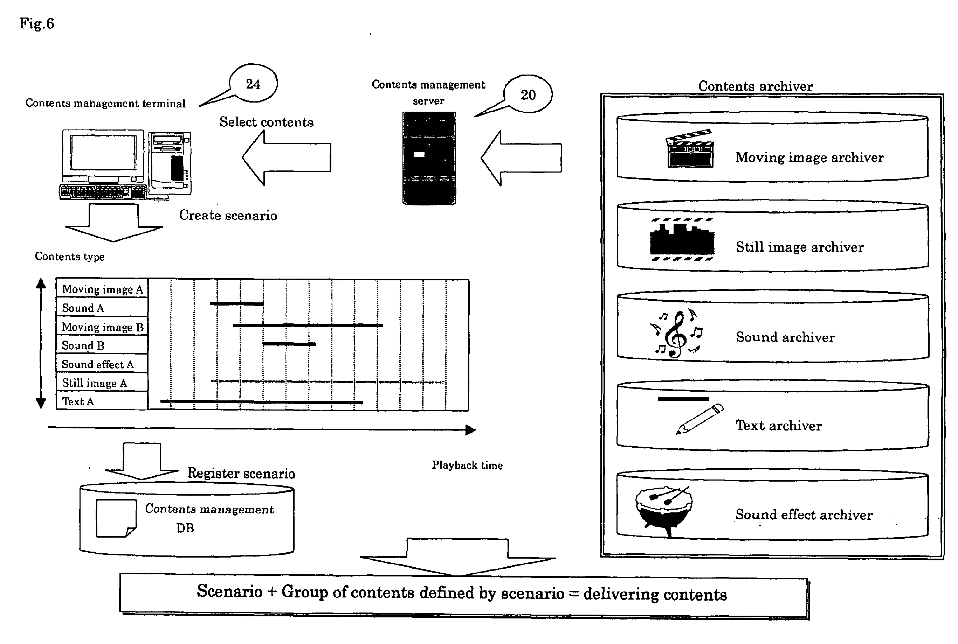

Fig. 6 is a conceptual diagram showing the method of expressing delivery contents in a scenario. More specifically, the delivery contents creator previously registers the material contents necessary for services into the contents archiver 22 via the contents management server 20 by using the contents management terminal 24. At the time of creation of the delivery contents, the material contents to be combined into the delivery contents are selected out of the material contents recorded on the contents archiver 22. As shown in the diagram, by using a chart which indicates the replay times of the material contents, or a replay chart, the material contents to be combined are registered along the time axis to create a scenario. The created scenario is registered into a database of the contents management server 20.

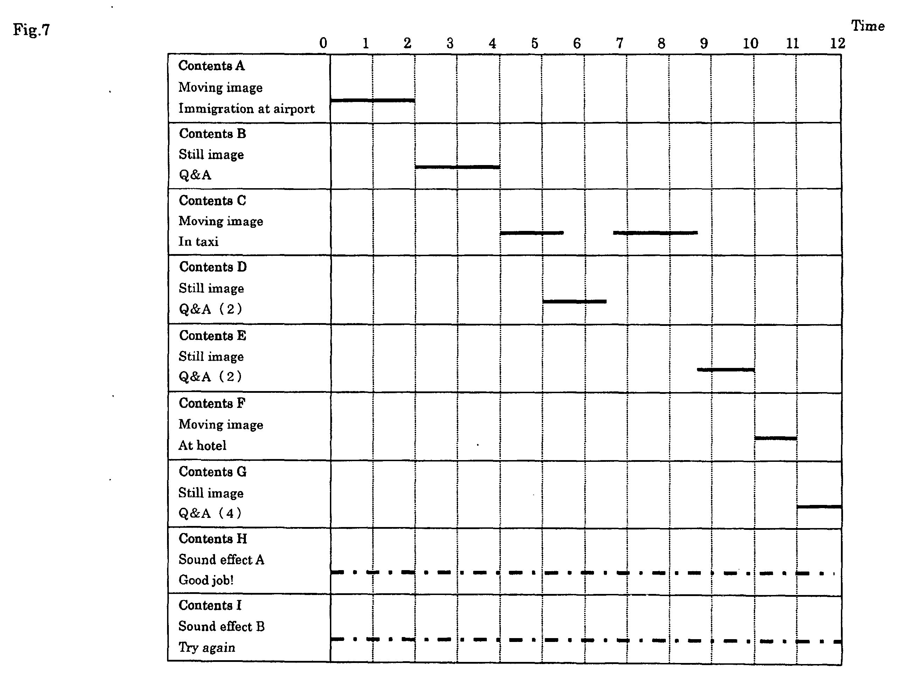

Fig. 7 shows an example of the scenario created. As shown, a combination of moving images, still images, sound effects, and the like is defined along the time axis to constitute a single piece of delivery contents. Here, the dot-line expressions represent ones which can be replayed by operations from a certain terminal anytime within a specific period. Consequently, for example, the chairperson can replay sound effects, subtitles, etc. anytime within a specific period for effective presentation.

### [Information Included in Scenario]

A scenario includes the following information in order to achieve delivery of a combination of material contents and allow flexible administration.

### 1. Definition of Delivery Contents

Information as to the entire contents for delivery is defined.
(1) Delivery contents attribute information
   Describes creator, creation date and time, title, genre, and additional information. This allows retrieval of the delivery contents (scenario).
(2) Used material contents information
   Specifies material contents to be used in the delivery contents.

### 2. Definition of Material Contents

Information as to each piece of the material contents to be used in the delivery contents is defined.
(1) Material contents attribute information
   Describes creator, creation date and time, title, genre, and additional information. This allows retrieval of the delivery contents (scenario) based on the attributes of the material contents used.
(2) Material contents type information
   Specifies the type of material contents (moving image/still image/sound/text/application data). Here, the filename extension of the designated material contents may be used for specification.
(3) Replay time specification information
   Specifies the replay start time and replay end time of the material contents in terms of relative time within the delivery contents. This can specify the replay period of the material contents within the delivery contents. A replay time may be used instead of the replay end time.
   Here, the replay end time/replay time may be omitted if the material contents have a fixed replay time.
(4) Replay mode specification information
   Specifies the mode of replay of the material contents between automatic replay and manual replay. In the case of manual replay, the contents are replayed under the instruction from the user terminal. For example, this makes it possible to replay sound effects, subtitles, and the like at arbitrary timing for effective presentation.
(5) Replay application specification information
   Specifies which application is used to replay the material contents. The application for replaying the material contents is thus defined by the scenario. Here, the filename extension of the designated material contents may be used for specification.
(6) Replay screen specification information
   Specifies the position and size of the material contents replayed on-screen. The position and size of the material contents under replay on-screen can thus be specified for effective presentation. For sounds, an icon to appear on-screen and the position thereof may be specified.
(7) Chairperson terminal operation specification information
   Specifies operations (play/stop/pause/fast forward/rewind, etc.) available for the chairperson terminal 30 (or a chairpersonship-flagged user terminal) during the replay of the material contents. The chairperson can thus control contents replay in accordance with the progress of the service, allowing various service modes.
(8) Attendant terminal operation specification information
   Specifies operations (play/stop/pause/fast forward/rewind) available for the user terminal during the replay of the material contents. This allows attendants to replay the contents according to their own paces.
(9) Location specification information
   Specifies the location where the material contents are stored. This makes it possible to replay the material contents by designating a protocol and server name even if the user terminal does not contain the material contents. Material contents managed in a plurality of centers can also be used for contents delivery. Moreover, the picture and sound link unit 26 can achieve a live link when the contents management server 20 is specified as the location.
(10) Replay part specification information
   Specifies the start time and end time of the part of the material contents to replay. This allows specifications for partial replay of the material contents. A replay time may be used instead of the end time.

### [Method of Scenario-Based Contents Delivery]

Next, description will be given of the method of delivering contents by using the scenario described above.

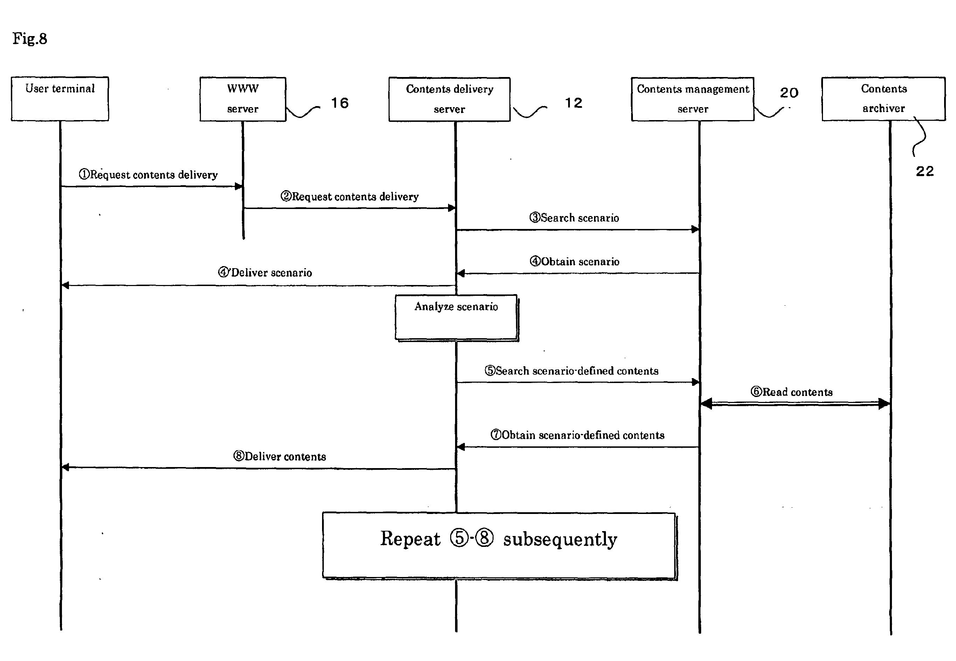

Fig. 8 shows the procedure for scenario-based contents delivery. The contents delivery server 12 receives a contents delivery request from a user terminal via the WWW server 16, and obtains the scenario from the contents management server 20. The contents delivery server 12 also delivers the obtained scenario to the user terminal for the sake of controlling the user terminal. Subsequently, the contents delivery server 12 analyzes the scenario, fetches the material contents defined in the scenario from the contents archiver 22 via the contents management server 20 in succession along the time axis, and delivers the same to the user terminal. These operations are performed on all the material contents defined in the scenario to complete the delivery of the delivery contents.

The destination terminal receives the delivered contents, and replays the same by using designated applications according to the description of the scenario, so that images are displayed in the specified positions on-screen. When a certain operation is specified by the chairperson terminal 30 or an attendant terminal, a predetermined replay control is effected under the command from that terminal.

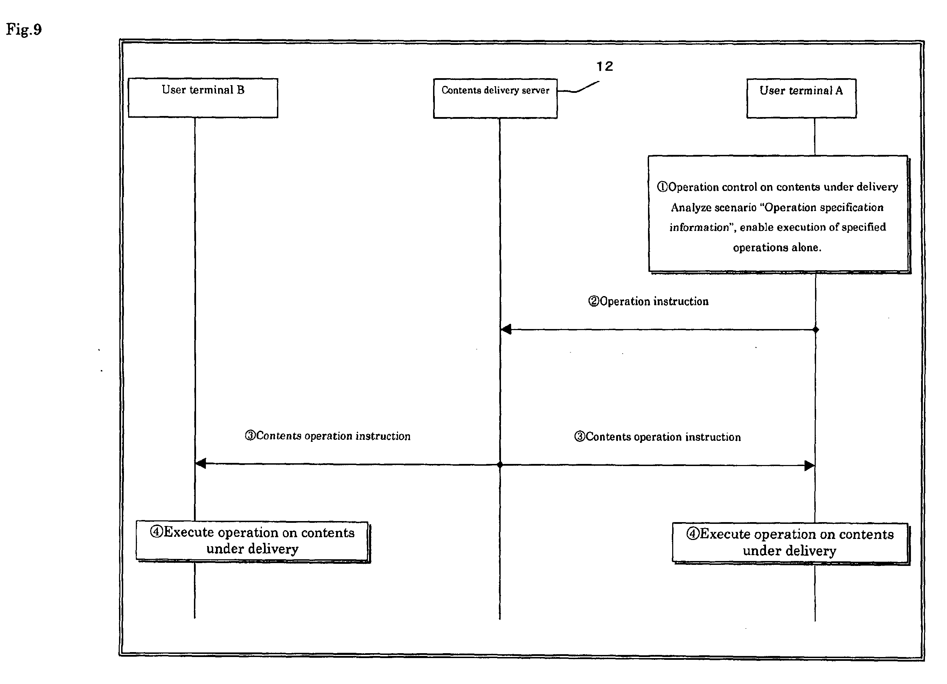

Now, description will be given of the synchronization of replay of material contents between terminals. Fig. 9 shows the procedure for operation control on contents under delivery. As shown in the diagram, when an operation instruction for a possible operation is issued from an operable terminal based on the operation specification information of the scenario, it is posted to the contents delivery server 12. The contents delivery server 12 delivers the operation instruction to each terminal. In order to perform replay based on the operation instruction, all the terminals replay the material contents in synchronization with each other.

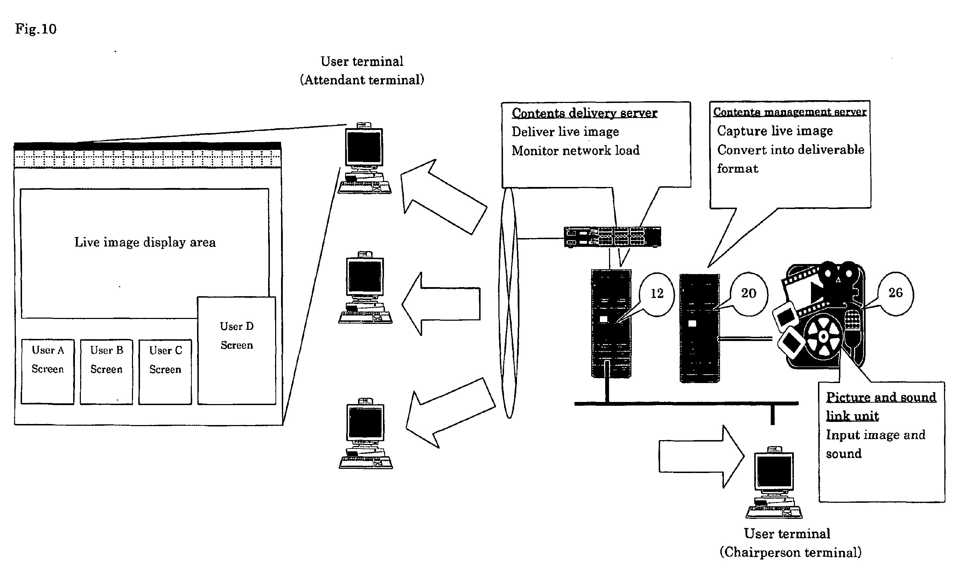

The contents management server 20 is provided with the picture and sound link unit 26, and has the function of capturing picture signals and sounds signals connected thereto and converting the same into deliverable formats. This allows real-time link of live pictures and sounds to the contents to be delivered. Fig. 10 is a conceptual diagram showing the live link function.

When the contents to be delivered are moving images, streaming delivery is performed. Like the bidirectional communication server 10, the contents management server 20 has the function of modifying the frame rate of the moving images according to the communication band of the network. The contents management server 20 may also have the function of modifying the sampling rate or quantizing bit rate of sounds according to the communication band of the network if the contents to be delivered are sounds. Consequently, even when the communication band of the network is limited, the contents delivery function can be maintained in quality corresponding to the communication band to provide optimum services.

In the foregoing embodiment, the contents delivery server 12 initially transmits the scenario to the destination terminal(s), and then delivers the material contents at the respective replay times defined in the scenario so that the destination terminal(s) performs replay based on the scenario. Nevertheless, the destination terminal(s) may issue requests based on the scenario that the contents delivery server 12 delivers necessary material contents. In this case, if identical material contents are used repeatedly, the material contents delivered previously can be reused for a reduction in network load.

The contents delivery server 12 may deliver images and sounds that are synthesized according to the scenario, instead of delivering the separate material contents to the destination terminal(s). This facilitates such operations as superimposing subtitles on moving images and still images. This also reduces the load on the destination terminal(s), though with limitation to the operation flexibility in the destination terminal(s). Which method to adopt, delivering separate material contents or synthesized ones, may be selected depending on the network load and the service contents. Both types of contents may be delivered in combination, and replayed in respective separate windows on the destination-terminal side. This makes it possible to provide a contents delivery function of extremely high flexibility with suppressed network load.

The scenario described above may be written in XML or other description languages. This allows the individual terminals to read the scenario with their browsers, so that material contents can be selected along the time axis and replayed automatically by plug-in applications of the browsers.

### [Method of Scenario Creation]

Next, description will be given of the method of creating the scenario described above.

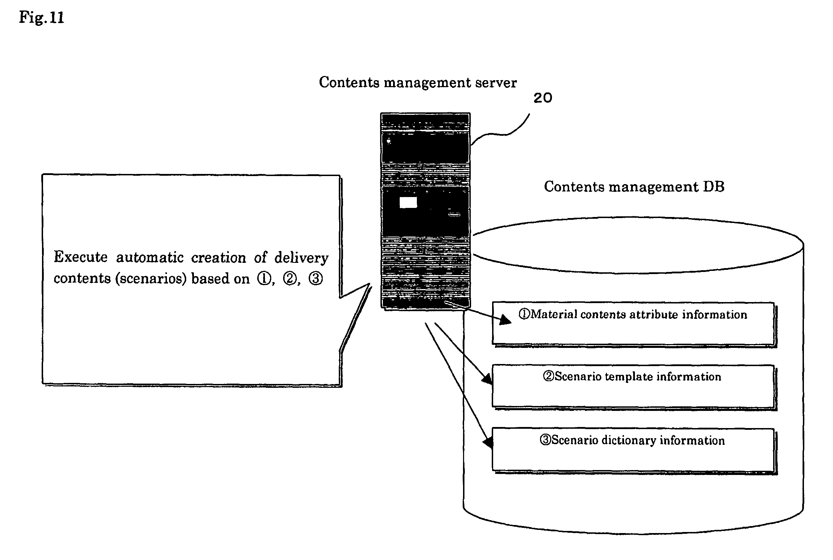

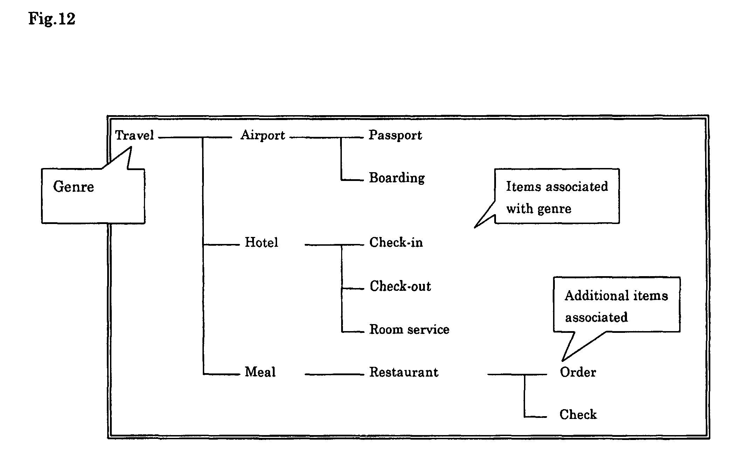

In this information communication service center, as shown in Fig. 11, the contents management database of the contents management server 20 contains attribute information, scenario dictionaries, and scenario templates. The attribute information concerns the material contents that are stored in the contents archiver 22. The scenario dictionaries show the relationship of the types of materials, or genres, with associated information. The scenario templates describe basic configuration patterns of scenarios. Then, the contents management server 20 has the function of creating scenarios automatically based on these. Fig. 12 shows a sample of description in a scenario dictionary. As shown in the diagram, associated information for a single genre is written in a tree form. Such scenario dictionaries are prepared in advance so as to cover the attribute information of the registered material contents. The scenario templates describe genres, replay time, and the numbers of pieces of material contents, as well as the attribute information, type information, replay time information, operation information, and the like of the material contents specifiable. The scenario templates are created and registered for necessary patterns in advance.

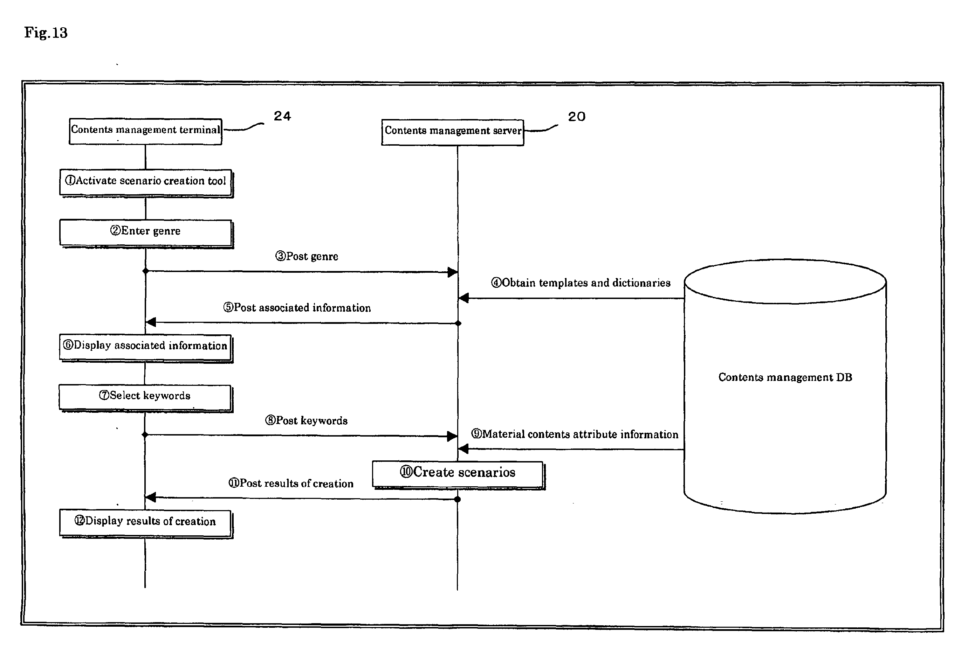

Fig. 13 shows the procedure for creating scenarios automatically by using the contents management database mentioned above. The scenario creator activates a scenario creation tool from the contents management terminal 24. When a genre is entered by the scenario creator, the contents management terminal 24 posts it to the contents management server 20. The contents management server 20 retrieves scenario templates and a scenario dictionary conforming to the posted genre from the contents management database. It also retrieves associated information from the scenario dictionary based on the genre and posts it to the contents management terminal 24. The contents management terminal 24 displays the associated information posted, and posts keywords that are entered by the scenario creator based on the display to the contents management server 20. The contents management server 20 retrieves the material contents that fit with the scenario templates based on the keywords posted, and obtains attribute information thereof. The contents management server 20 creates scenarios by transcribing the obtained attribute information of the material contents into the corresponding positions of the scenario templates, and posts the results of creation to the contents management terminal 24. The contents management terminal 24 displays the results of creation, modifies and edits the same if needed, and registers the completed scenarios into the contents management database of the contents management server 20.

As above, the scenarios are created automatically in this information communication service system, and new contents incorporating hot topics can be made rapidly.

In the foregoing embodiment, the scenario templates are selected by entering a genre alone. It is also possible, however, to designate the replay time or the ratios of contents types in the replay contents. Moreover, in order to inform the scenario creator of possible genres, replay times, and contents ratios in advance, the information as to the registered scenario templates may be displayed so that selections are made from the same.

In the foregoing embodiment, the scenarios are created automatically by using the scenario dictionaries which describe the relationship between genres and associated information, and scenario templates which describe scenario configuration patterns for creating scenarios. However, the scenarios need not necessarily be created automatically. The scenario creator may enter keywords, retrieve related material contents based on the same, and write the attribute information of the retrieved material contents in the form of scenario data. In this case, necessary material contents can be fetched quickly with an improvement in the efficiency of scenario creation. Incidentally, the attribute information of the material contents may be written into scenario data by such means as a text editor.

The scenario dictionaries may be used alone to retrieve associated information based on the genre entry. Then, the material contents are retrieved based on the associated information, and the attribute information of the retrieved material contents is written into scenario data. Necessary material contents can thus be fetched quicker than in the case of entering keywords, with a further improvement in the efficiency of scenario creation.

In addition, the replay time specification information of the material contents may be set by using a replay chart which shows the replay periods of the respective pieces of material contents. For example, as shown in Fig. 7, a minimum unit time for replaying material contents may be determined in advance so that the replay time specification information is set by selecting frames for replaying the material contents on-screen. This facilitates setting the replay time specification information of the material contents and clarifies the interrelationship among the replay periods of the respective pieces of material contents, allowing effective contents creation.

Scenario templates may be selected based on the genre entry among scenario templates. Here, a list of material contents conforming thereto is displayed, and desired material contents are selected from the list. This automatic retrieval of material contents conforming to scenario templates facilitates combining the material contents. The attribute information of the material contents may be transcribed to the scenario data automatically with a dramatic improvement in the efficiency of scenario creation.

While the foregoing embodiment has dealt with the case where the scenario templates describing basic scenario patterns are created in advance, scenarios registered previously may be used as scenario templates. This makes it possible to create scenarios without preparing scenario templates in advance. This also facilitates creating scenarios of modified contents easily based on the scenarios registered previously.

Now, description will be given of the screen display on a user terminal under information communication service using the bidirectional communication functions and the contents delivery function.

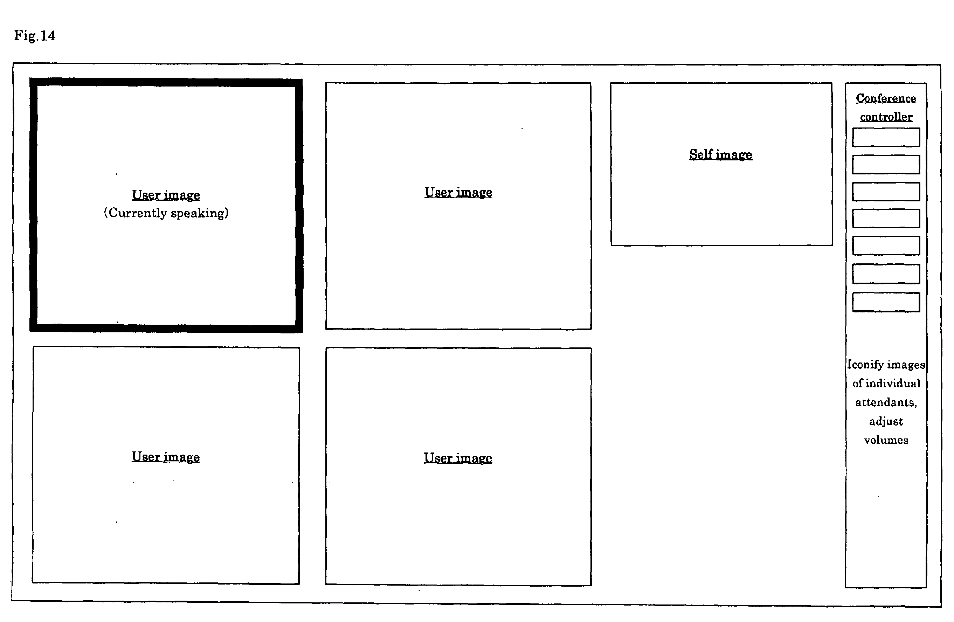

Fig. 14 shows an example of screen display when the conversation function of the bidirectional communication server 10 is used alone. This example of screen display is for situations with five users including the chairperson. Windows for displaying the images of the other users and a window for displaying the image of the user himself/herself are created on-screen. Here, the screen has buttons for controlling the video conference function. These buttons are used to exercise the above-described controls on screen configuration, sound allocation, etc. As mentioned previously, the windows of users currently speaking are to be highlighted.

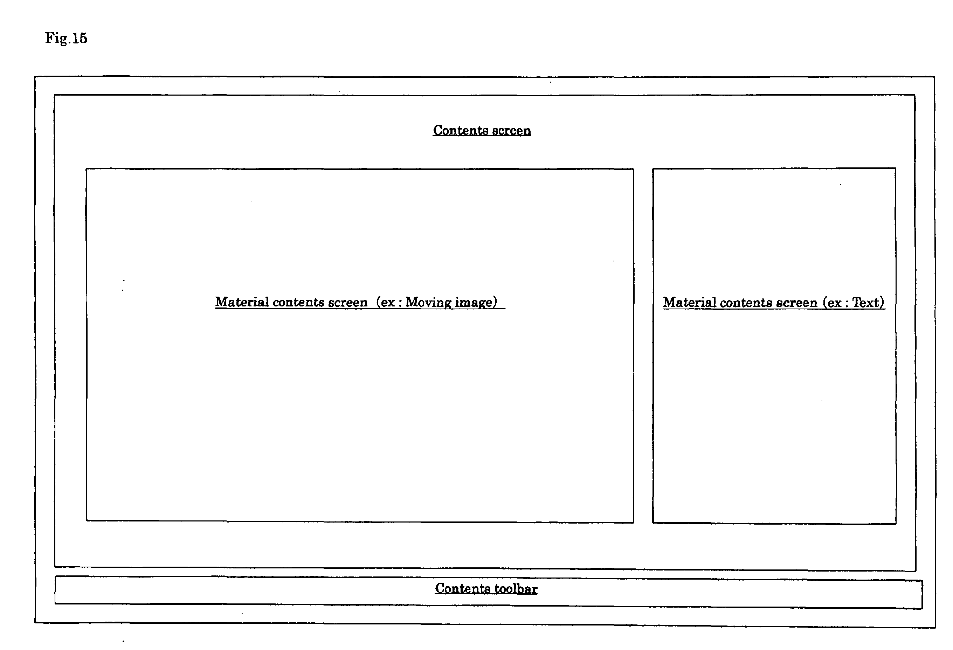

Fig. 15 shows an example of screen display when contents delivery by the contents delivery server 12 is effected alone. Here, a moving-image window and a text window are created and displayed separately. Nevertheless, the windows may be synthesized on the contents-delivery side and transmitted as subtitled display.

There is also provided a contents toolbar, which is displayed active when operable for contents play, stop, pause, fast forward, rewind, etc., for example. These operations can be made based on the operation specification information of the scenario described above.

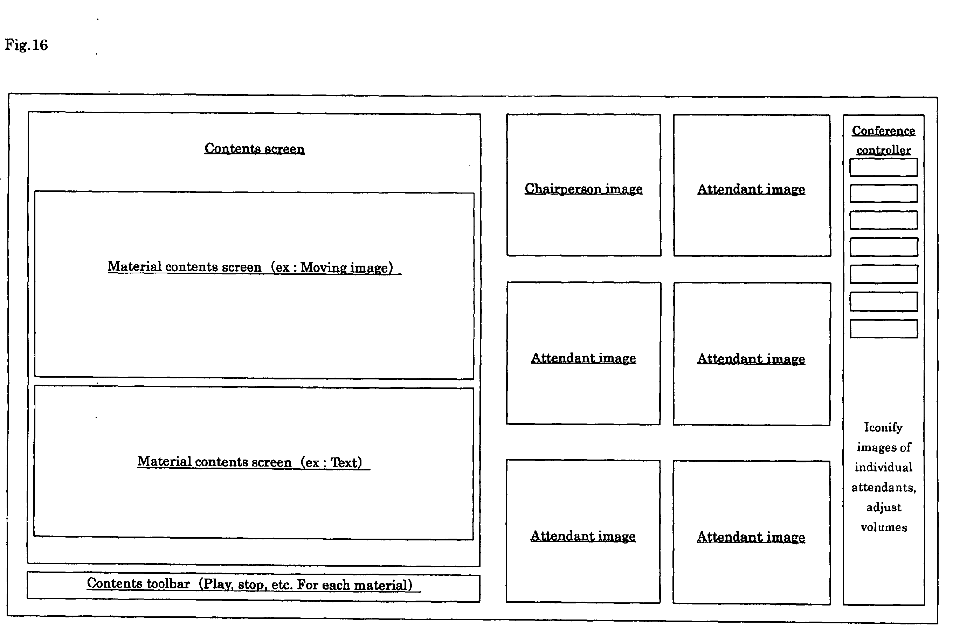

Fig. 16 shows an example of screen display when conversations via the bidirectional communication server 10 are held under contents delivery by the contents delivery server 12. As shown, the attendants can face one another while receiving contents delivery for effective communication. Here, it is also possible to operate the conference control buttons for screen display and the toolbar for contents replay.

### [Mode of Service Provision]

Next, description will be given of the modes of services to be provided by the system of the present embodiment. This information communication service system has both the bidirectional communication functions and the contents delivery function, and can thus provide the following two modes of services.

### 1. Face-to-Face Service

In the presence of a chairperson, attendants can hold conversations with the chairperson via the bidirectional communication server 10, under contents delivery service by the contents delivery server 12 if necessary.

### 2. Automatic service

In the absence of a chairperson, attendants can receive contents delivery service by the contents delivery server 12 independently.

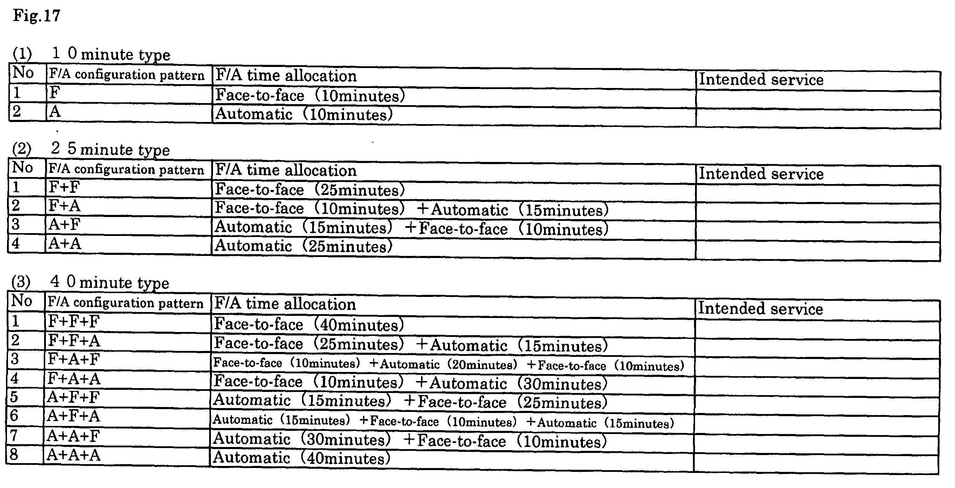

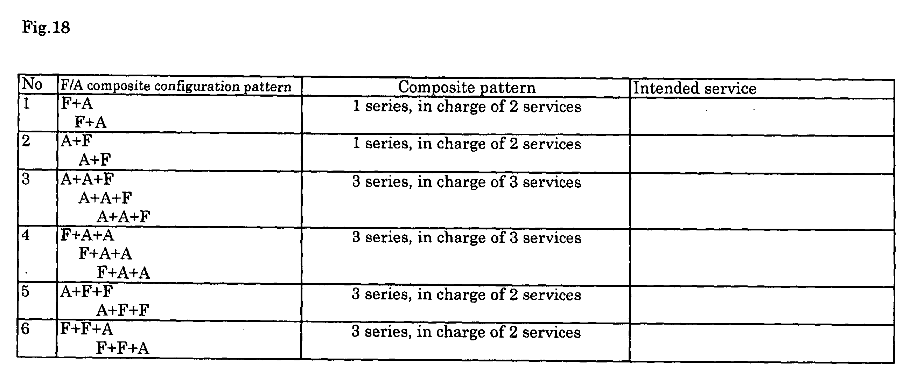

Then, this information communication service system is configured to provide services based on service menus which offer face-to-face services and automatic services in combination, with a basic unit of service of 15 minutes and a preparation time of 5 minutes for a chairperson or others. Fig. 17 shows examples of service configuration patterns for 10-minute type, 25-minute type, and 40-minute type. In the diagram, F represents a face-to-face service, and A an automatic service. Since service menu files can include combinations of face-to-face and automatic services, a chairperson can take charge of a plurality of services as shown in Fig. 18. This allows each single chairperson to take charge of a number of services in parallel, with a reduction in personnel cost. It is therefore possible to provide interactive services for small groups at lower cost.

The system of the present invention can also provide the following services.

### 3. Group Debate Service

A plurality of attendants can hold mutual conversations via the bidirectional communication server 10 without a chairperson, with contents delivery service by the contents delivery server 12 if necessary.

### 4. Free Talk Service

A freely-accessible conference room is opened full-time, so that attendants can access this conference to have conversations with the chairperson and other attendants via the bidirectional communication server 10, with contents delivery service by the contents delivery server 12 if necessary.

In this way, the members can receive various modes of services in arbitrary combination while staying at home.

### [Function of Administration Management Systems]

Now, description will be given of the functions and procedure of the administration management systems.

The administration management systems are in charge of service provision. With the aim of improving the efficiency of administration, maintaining service quality, and enhancing the mechanism for accepting members to be served, the administration management systems are composed of the membership information management system 50, the service assist system 52, the service execution management system 54, and the delivery service management system 56.

### 1. Membership Information Management System

The membership information management system 50 is intended to manage information as to members.

### (1) Member registration function

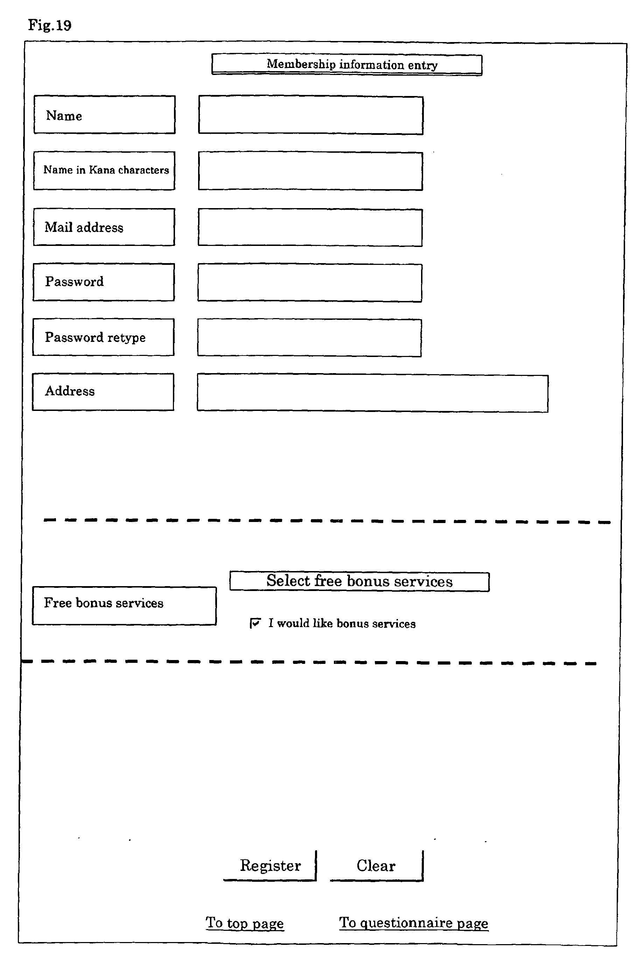

Accepts registration of membership information from "Membership information registration" page of a Web site on the WWW server 16. Fig. 19 shows an example of a membership information entry screen. When the membership information management system 50 accepts registration, it issues ID and a password, and sends a confirmation mail describing the issued ID, password, and the entered membership information to the one who entered the information. When the membership information management system 50 receives from the member a reply mail that tells of the absence of errors in the confirmation mail, it actually registers the ID, password, and entered information to its membership information database. In this way, the registration information is confirmed by means of mails to prevent erroneous member registration and enhance security.

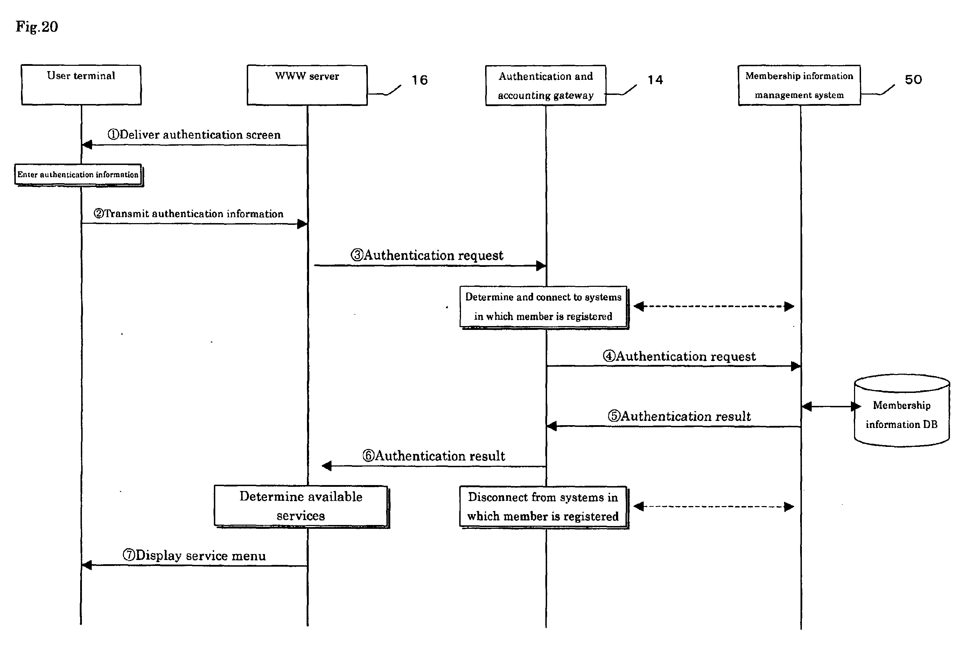

After registration, these ID and password can be used to receive necessary member services on the Web site. Fig. 20 shows the procedure for performing member authentication and accounting by using the ID and password obtained through the member registration. When the member accesses a member service page provided on the WWW server 16 from his/her user terminal, an authentication screen is delivered. Here, the ID and password are entered, and the membership information management system 50 is inquired of that authentication information via the authentication and accounting gateway 14. The membership information management system 50 consults the membership information database and posts the result of authentication to the WWW server 16. From the result of authentication, the WWW server 16 determines which services are available, and delivers the corresponding service menu to the user terminal.

While members are served through the authentication and accounting gateway 14, accounting on the members is performed. This information communication service system has the following three modes of accounting in view of the particularities of the services to be provided.

A first mode is to charge based on the connect times of user terminals. This mode can be effected by measuring the time to elapse from the confirmation of authentication by the authentication and accounting gateway 14 to disconnection at the completion of service. Consequently, charges can be summed up separately even if the connect times vary user by user.

A second mode is to charge based on the connect time of the chairperson terminal used by a chairperson (such as an instructor, doctor, and consultant). This mode can be effected by measuring the time for which user terminals are checked in with the chairperson terminal 30 and the bidirectional communication server 10, and posting the time to the authentication and accounting gateway 14 after the completion of service. This realizes charging based on the actual service time of the instructor, doctor, consultant, etc.

A third mode is to charge based on the contents delivered. This mode can be effected by obtaining the charge information on contents delivered from the contents management server 20 when the contents delivery server 12 delivers the contents to user terminals, and posting the charge information to the authentication and accounting gateway 14 after the completion of service. This realizes charging according to the contents delivered.

As above, this information communication service system has the three modes of accounting and can combine these for charging depending on the services. It is therefore possible to set appropriate charges in accordance with the services to be provided.

### (2) Registration information inquiry and modification function

Makes inquires and modifications of the membership information registered. Again, when the membership information is modified, a confirmation mail describing the entered information is sent to the member. Actual registration is conducted after the reception of a reply mail telling of the absence of errors in the confirmation mail.

Incidentally, this function allows the members to change their passwords as needed, thereby providing protection against unauthorized access by others.

### (3) Questionnaire management function

Accepts entries to questionnaires on "Questionnaire" page of the Web site on the WWW server 16. The membership information management system 50 receives the entries to the questionnaires, and registers the entered information to its questionnaire database.

### (4) Service point management function

Manages points for member services. This information communication service system performs accounting of deposit type in order to avoid troublesome service-by-service money reception. Service points can be refilled only by the bureau which has a certain ID and password. When the reception of money from a member is confirmed, service points corresponding to the amount of money are added. For withdrawal, service points corresponding to the services to be provided are withdrawn automatically upon receiving notices from the service assist system at the time of service reservations. Incidentally, when services are cancelled, certain points are returned for notices from the service assist system according to predetermined conditions.

The members can check their current services points anytime by using the membership information inquiry function. When the service points fall to or below certain points, the members are informed of it automatically by mails. As a result, the members can grasp their remaining service points anytime to avoid such troubles as unavailable services due to unpayment.

Incidentally, in the foregoing embodiment, the service points are added when the reception of money is confirmed by the bureau. Alternatively, members may request to refill service points on the Web site or by mail so that the amounts of money corresponding to the points may be withdrawn from the members' bank accounts based on the requests. In this case, the points are added upon confirmation of the withdrawal.

### (5) Bonus score management function

Manages scores acquired by members who wish for free bonus services (referred to as "bonus scores"). The membership information management system 50 grants additional bonus scores in any of the following cases:
(i) On purchase of service points
   The additional scores may be proportional to the purchased points, or increased stepwise.
(ii) After a lapse of predetermined dates since member registration
   The additional scores may be proportional to the elapsed dates, or increased stepwise.
(iii) At a predetermined number of times of course participation
   The additional scores may be proportional to the number of times of participation, or increased stepwise.
(iv) For questionnaire answers
(v) In promotion periods

Certain additional scores may be granted for every member. Some scores may be added when predetermined conditions are met within a period. For example, additional bonus scores may be given to such members as those who consume services intensively, who are recommended by chairpersons, who achieve improvements beyond a certain level in test evaluations, and who are registered newly.

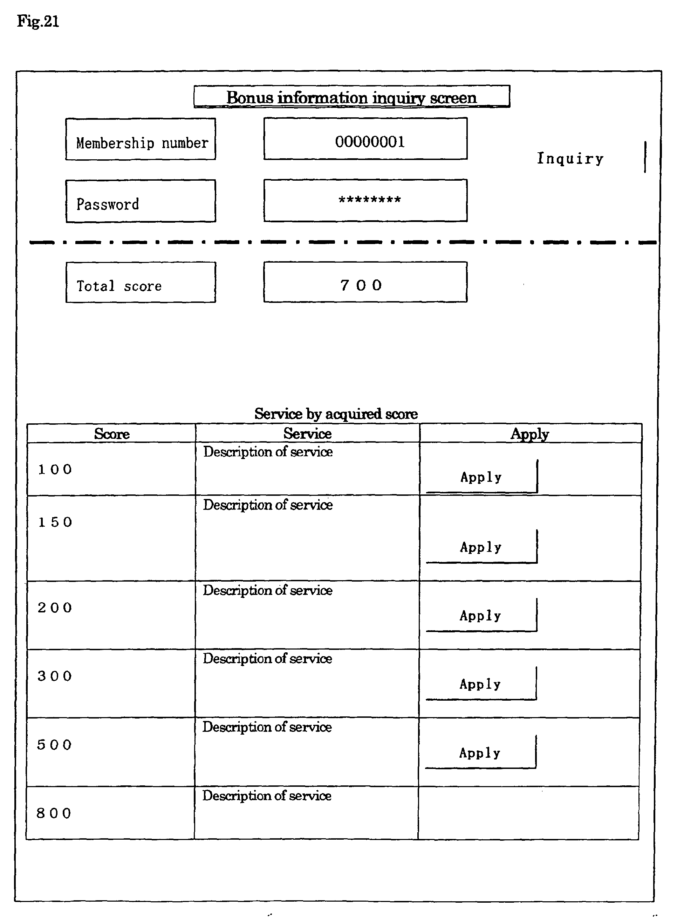

The bonus scores are registered in the membership information database. The details of the registration can be checked anytime on "Bonus information inquiry" page of the Web site on the WWW server 16. Fig. 21 shows an example of the bonus information inquiry screen. As shown in the diagram, the total score acquired so far and the descriptions of services available with the score are displayed. Applications for the services can be made online. Free bonuses available to members include free courses, free access to the free-talk service, free tests, free delivery of contents, travel discount tickets, and free gifts.

Mails describing free bonuses available to members may be sent automatically when predetermined bonus scores are reached. The mails may contain the URL for accessing the foregoing Web site. Applications for the free bonuses may be accepted automatically by means of reply mails. In particular, it is highly effective to deliver mails telling of occurrence of bonus points actively and automatically in promotion periods. As above, it is possible to give incentives for enrollment promotion, skill improvement, and the like by providing members with the free bonus scoring system and actively informing them of how many bonus scores are accumulated and that free bonuses are available.

### 2. Service Assist System

The service assist system 52 is intended for efficient service provision.

### (1) Course registration function

Accepts registration for courses for members to take, from "Course registration" page of the Web site on the WWW server 16. The accepted courses are coded and registered into a course registration database.

### (2) Service reservation function

In response to service applications from members, provides the members with conference availability of the bidirectional communication server 10, availability of chairperson terminals 30, and availability of contents delivery by the contents delivery server 12. These availabilities are determined by consulting resource management files for managing the conference schedule of the bidirectional communication server 10, the use schedules of the chairperson terminals 30, and the delivery schedule and the like of the contents delivery server 12. When the members reply for the services, the services are registered to service reservation transactions. Chairperson management files and the resource management files associated with the services are also updated. In this way, the chairperson schedules and the resource availabilities are determined automatically for efficient reservation management.

The applications for services may be made in any of dial-up mode, Web mode, and interactive mode. In dial-up mode, the members call the bureau and input numbers for application according to voice guidance. In Web mode, applications are made from "Service reservation" page of the Web site on the WWW server 16. In interactive mode, applications are made by using the bidirectional communication server 10.

Incidentally, service reservations made previously can also be cancelled by modifying the service reservation transactions, the chairperson management files, and the resource management files based on the details of reception.

The foregoing embodiment has dealt with the case where services are assigned to member applications automatically with reference to the resource management files. However, the present invention is not limited thereto. An annual service schedule may be established in advance to accept member applications to this schedule so that service reservation transactions are issued based on the results of reception.

The foregoing embodiment has dealt with the case where services require advance reservations. However, the present invention is not limited thereto. Whether services are available or not may be determined with reference to the resource management file upon member applications, whereby the services are set when available. This makes it possible for the members to be served without reservation.

### (3) Karte management function

Issues kartes for members who are registered in service courses, and keeps service histories.

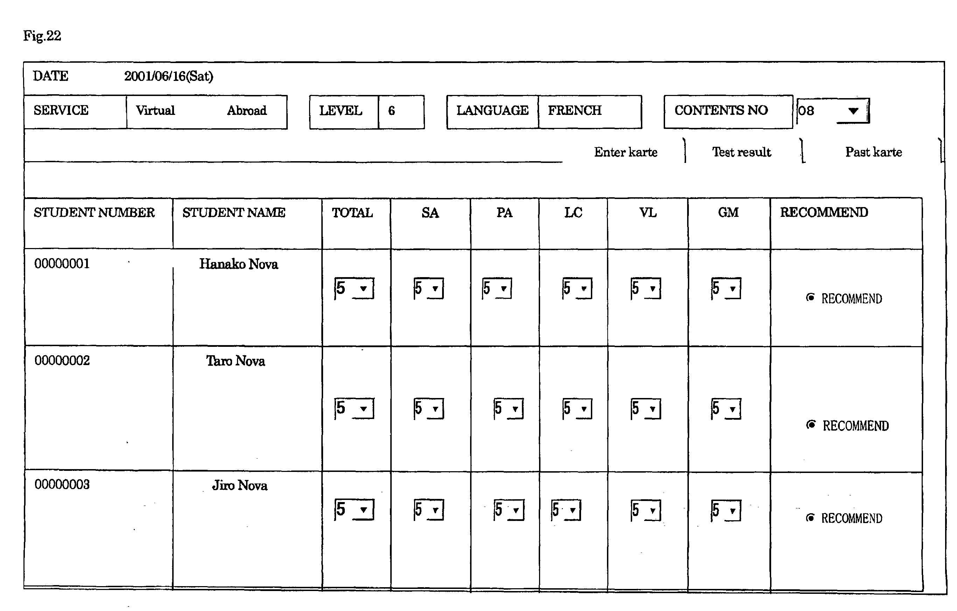

Each karte contains such items as the name, date, and evaluation of a service provided. In face-to-face services, evaluations are input service by service in principle by the instructor, doctor, consultant, or others in charge. Fig. 22 shows an example of a karte entry screen.

In automatic services, quiz contents are delivered at the ends of the services, and the attendants answer to the same by button operations. The service assist system 52 has the function of rating the answers with reference to service evaluation automatic rating files, which describe the correspondence between answers and evaluations, and inputting the rated results into the records automatically. Evaluations can thus be made even in automatic services, allowing detailed guidance for members.

### 3. Service Execution Management System

The service execution management system 54 is intended to manage the execution of services set by the service assist system 52.

### (1) Service execution management function

With reference to service reservation transactions, requests the bidirectional communication server 10 to set a conference room, and posts the addresses of attendant terminals and chairperson terminal to connect a predetermined time before a service reservation. The bidirectional communication server 10 thus sets a conference room, and accepts connection requests from the attendant terminals and chairperson terminal 30 notified.

At service start time, the service execution management system 54 posts the addresses of the destination attendant terminals and chairperson terminal to the contents delivery server 12, thereby submitting preparation for delivery. Consequently, in the case of interactive services, the contents delivery server 12 informs the chairperson terminal that the preparation for delivery is completed, and starts delivery under a delivery start instruction from the chairperson terminal. In the case of automatic services, the contents delivery server 12 informs the attendant terminals that the preparation for delivery is completed, and starts delivery under delivery start instructions from the attendant terminals.

### 4. Delivery Service Management System

The delivery service management system 56 exercises centralized control on mail delivery for registered members.

The mail delivery covers confirmation mails concerning the registration and modification of membership information, notification of bonus scores, and delivery of member-requested contents described so far. Moreover, direct mails concerning various events, promotion information, and the like are also delivered.

In the foregoing embodiment, the Internet is used as the communication lines. The services are thus available to even remote locations anytime without worry about telephone bills. The foregoing embodiment has dealt with the case where the chairperson uses a chairperson terminal 30 in the information communication service center. Nevertheless, the present invention is not limited thereto, and the chairperson may use a user terminal connected to the Internet. This can be effected by setting a chairpersonship flag for a certain user terminal as described above. Consequently, as long as an Internet-accessible user terminal is available, the chairperson can provide services from anywhere anytime. This allows more flexible service provision.

The foregoing embodiment has dealt with the case where the Internet is used as the communication lines. However, the present invention is not limited thereto. Telephone lines may be used to connect to the information communication service center directly.

Alternatively, LAN, WAN, and the like may be used in such applications as corporate education and school education. The present invention also provides the same effects even when used for services to be provided in a certain group. Needless to say, the communication lines are not limited to wired ones, but may also be wireless ones.

The present invention is also applicable to situations where the information communication service center has booths for service provision. Combinations of interactive services and automatic services can thus be provided to offer services using a variety of multimedia contents while allowing service providers to take charge of a plurality of services with a reduction in personnel cost.

The foregoing embodiment has dealt with the case where the user terminals used by the members are personal computers having an interface function for a TV camera and a microphone, and an Internet connection function. Nevertheless, any kind of terminal can be used as long as it is connectable to the communication lines and has the interface function for a TV camera and a microphone. Available terminals include PDAs, game consoles, and other mobile terminals aside from dedicated terminals. Such devices as a cellular phone with a TV camera are also expected to be available in the future, and full use of such devices can widen the range of target users.

### INDUSTRIAL APPLICABILITY

As has been described, according to the present invention, the multimedia information communication service system comprises: the bidirectional communication means for conducting bidirectional communication using multimedia information; the contents management means for storing multimedia contents; and the contents delivery means for delivering the contents stored in the contents management means to user terminals. The multimedia information communication service system thus has the bidirectional interactive function using multimedia information including TV pictures and sounds, and the function of delivering multimedia contents such as moving images, still images, and text. This allows the user terminals to hold conversations while receiving delivery of the multimedia contents simultaneously, with the effect that sophisticated information communication services become available.
1. A multimedia information communication service system for providing an interactive information communication service using multimedia information between a plurality of user terminals connected to a network, comprising:
   bidirectional communication means for providing, between the user terminals, a bidirectional communication function using multimedia information including TV pictures and sounds;
   contents management means for storing contents to be delivered to the user terminals; and
   contents delivery means for delivering the contents stored in the contents management means to the user terminals.
2. The multimedia information communication service system according to claim 1, wherein the contents management means includes material contents storing means for storing materials of the contents to be delivered, or material contents, and scenario storing means for storing a scenario defining a combination of the material contents along a time axis, and
   wherein the contents delivery means fetches and delivers the material contents stored in the material contents storing means based on the scenario stored in the scenario storing means.
3. The multimedia information communication service system according to claim 1 or 2, wherein the bidirectional communication means has the function of synthesizing the multimedia information transmitted from the plurality of user terminals and delivering the resultant to the user terminals.
4. The multimedia information communication service system according to claim 1 or 2, wherein the bidirectional communication means has the function of delivering the multimedia information transmitted from the plurality of user terminals to user terminals other than the sources thereof separately.
5. The multimedia information communication service system according to any one of claims 1 to 4, wherein the bidirectional communication means has the function by which the configuration of screens to be displayed on the user terminals is controlled from a certain user terminal.
6. The multimedia information communication service system according to any one of claims 1 to 5, wherein the bidirectional communication means has the function by which the allocation of sounds of the respective users to be output on the user terminals is controlled from a certain user terminal.
7. The multimedia information communication service system according to any one of claims 1 to 6, wherein the bidirectional communication means has the function of controlling the configuration of screens to be displayed on the user terminals based on magnitude of sound data transmitted from the user terminals.
8. The multimedia information communication service system according to any one of claims 1 to 7, wherein the bidirectional communication means has a data conference function of sharing an application to be performed on the user terminals.
9. The multimedia information communication service system according to any one of claims 1 to 8, wherein the bidirectional communication means has a chat function of realizing bidirectional communications between the user terminals by means of text entry.
10. The multimedia information communication service system according to any one of claims 1 to 9, wherein the bidirectional communication means has the function of modifying a quality of information to transmit in accordance with a communication band of the network.
11. The multimedia information communication service system according to any one of claims 1 to 10, wherein the contents delivery means has the function of controlling contents replay from the user terminals.
12. The multimedia information communication service system according to any one of claims 1 to 11, wherein the contents delivery means includes picture and sound link means, and has the function for a live link of pictures and sounds.
13. The multimedia information communication service system according to any one of claims 1 to 12, wherein the contents delivery means has the function of modifying a quality of information to transmit in accordance with a communication band of the network.
14. The multimedia information communication service system according to any one of claims 1 to 13, further comprising resource management means for managing availability of the bidirectional communication means and connections of the user terminals.
15. The multimedia information communication service system according to any one of claims 1 to 14, further comprising accounting means for calculating service charges for users, the accounting means having the function of summarizing connect times of the user terminals used by the users and conducting charging.
16. The multimedia information communication service system according to any one of claims 1 to 14, further comprising accounting means for calculating service charges for users, the accounting means having the function of summarizing connect time of a user terminal used by predetermined one other than the users and conducting charging.
17. The multimedia information communication service system according to any one of claims 1 to 14, further comprising accounting means for calculating service charges for users, the accounting means having the function of acquiring predetermined charge information on contents to be provided by the contents delivery means and conducting charging.
18. The multimedia information communication service system according to any one of claims 1 to 17, wherein some or all of the user terminals are connected over the Internet.
19. A program for use on a user terminal of the multimedia information communication service system according to any one of claims 1 to 18, comprising:
   means for acquiring a TV picture and sound of the user terminal;
   means for transmitting the TV picture and sound acquired;
   means for receiving TV pictures and sounds from the bidirectional communication means;
   means for receiving multimedia contents from the contents delivery means; and
   means for creating a predetermined window to output the received TV pictures and sounds and the received multimedia contents.
20. A computer-readable recording medium recording the program according to claim 19 for use on a user terminal of the multimedia information communication service system.

## Amended claims

### Amended claims under Art. 19.1 PCT

**1.** (Amended) A multimedia information communication service system for providing an interactive information communication service using multimedia information between a plurality of user terminals connected to a network, comprising:
bidirectional communication means for providing a bidirectional conversation function using TV pictures and sounds between the user terminals;
contents management means for storing multimedia contents to be delivered to the user terminals; and
contents delivery means for delivering the contents stored in the contents management means to the user terminals, wherein
the bidirectional communication means enables a conversation using the TV pictures and the sounds between the user terminals while the contents delivery means delivers the contents to the user terminals simultaneously.

**2.** (Amended) The multimedia information communication service system according to claim 1, wherein the contents management means includes material contents storing means for storing materials of the contents to be delivered, or material contents, and scenario storing means for storing a scenario defining a combination of the material contents along a time axis,
the contents delivery means includes means for fetching and delivering the material contents stored in the material contents storing means based on the scenario stored in the scenario storing means; and
the bidirectional communication means enables a conversation using the TV pictures and the sounds between the user terminals while the contents delivery means provides the user terminals with a sophisticated presentation using a plurality of material contents in combination.

**3.** (Amended) The multimedia information communication service system according to claim 1 or 2, wherein the bidirectional communication means has the function of receiving the TV pictures and the sounds transmitted from the individual user terminals, the function of synthesizing the received TV pictures and sounds, and the function of delivering the synthesized TV pictures and sounds to the individual user terminals.

**4.** (Amended) The multimedia information communication service system according to claim 1 or 2, wherein the bidirectional communication means has the function of receiving the TV pictures and the sounds transmitted from the individual user terminals, and the function of delivering the received TV pictures and sounds to user terminals other than the sources thereof, so that the user terminals each display the received TV pictures and sounds in combination.

**5.** (Amended) The multimedia information communication service system according to claim 3, wherein the bidirectional communication means has the function of receiving synthesis mode specification information for specifying a mode of synthesis of the TV pictures and sounds from one of the user terminals, and synthesizes and delivers the received TV pictures to the individual user terminals based on the received synthesis mode specification information.

**6.** (Amended) The multimedia information communication service system according to claim 4, wherein the bidirectional communication means has the function of receiving synthesis mode specification information for specifying a mode of synthesis of the TV pictures and sounds from one of the user terminals, and delivers the received synthesis mode specification information to the individual user terminals so that the user terminals each display the received TV pictures and sounds in combination based on the received synthesis mode specification information.

**7.** (Amended) The multimedia information communication service system according to claim 3 or 5, wherein the bidirectional communication means has the function of detecting a user terminal from which a sound having an intensity beyond a predetermined level is received, and the function of highlighting the TV picture of the detected user terminal for synthesis.

**8.** The multimedia information communication service system according to any one of claims 1 to 7, wherein the bidirectional communication means has a data conference function of sharing an application to be performed on the user terminals.

**9.** The multimedia information communication service system according to any one of claims 1 to 8, wherein the bidirectional communication means has a chat function of realizing bidirectional communications between the user terminals by means of text entry.

**10.** (Amended) The multimedia information communication service system according to any one of claims 1 to 9, wherein the bidirectional communication means has the function of acquiring band limitation information on the network, and the function of modifying a quality of information to be delivered based on the acquired band limitation information, so that the conversation function having a quality corresponding to a communication band of the network is maintained even when the communication band is limited.

**11.** (Amended) The multimedia information communication service system according to any one of claims 1 to 10, wherein the contents delivery means has the function of receiving a replay control signal for controlling contents replay from one of the user terminals, and the function of replaying and delivering the contents based on the received replay control signal, so that the replay of the contents is controlled according to the progress of service.

**12.** (Amended) The multimedia information communication service system according to any one of claims 1 to 11, wherein the contents delivery means has the function of linking external TV pictures and sounds, and the function of delivering the linked TV pictures and sounds as contents, thereby allowing a live link of the external TV pictures and sounds.

**13.** (Amended) The multimedia information communication service system according to any one of claims 1 to 12, wherein the contents delivery means has the function of acquiring band limitation information on the network, and the function of modifying a quality of information to be delivered based on the acquired band limitation information, so that the contents delivery function having a quality corresponding to a communication band of the network is maintained even when the communication band is limited.

**14.** (Amended) The multimedia information communication service system according to any one of claims 1 to 13, further comprising resource management means for managing availability of the bidirectional communication means and connections of the user terminals, thereby determining service availability.

**15.** The multimedia information communication service system according to any one of claims 1 to 14, further comprising accounting means for calculating service charges for users, the accounting means having the function of summarizing connect times of the user terminals used by the users and conducting charging.

**16.** (Amended) The multimedia information communication service system according to any one of claims 1 to 14, further comprising accounting means for calculating service charges for users, the accounting means having the function of summarizing connect time of a user terminal used by a certain user other than the users and conducting charging, thereby allowing collection of charges corresponding to the time of actual services of a service provider.

**17.** (Amended) The multimedia information communication service system according to any one of claims 1 to 14, further comprising accounting means for calculating service charges for users, the accounting means having the function of acquiring predetermined charge information on contents to be provided by the contents delivery means and conducting charging, thereby allowing collection of charges for contents provided in the process of service.

**18.** The multimedia information communication service system according to any one of claims 1 to 17, wherein some or all of the user terminals are connected over the Internet.

**19.** (Amended) A program for use on a user terminal of the multimedia information communication service system according to any one of claims 1 to 18, comprising:
means for acquiring a TV picture and sound of the user terminal;
means for transmitting the acquired TV picture and sound to the bidirectional communication means;
means for receiving TV pictures and sounds from the bidirectional communication means;
means for receiving contents from the contents delivery means; and
means for creating a predetermined window to output the received TV pictures and sounds and the received contents, whereby
a conversation using TV pictures and sounds is held with another user terminal with delivered contents being viewed simultaneously.

**20.** A computer-readable recording medium recording the program according to claim 19 for use on a user terminal of the multimedia information communication service system.

## Amended claims

### Amended claims under Art. 34 PCT

**4.** The multimedia information communication service system according to claim 1 or 2, wherein the bidirectional communication means has the function of receiving the TV pictures and the sounds transmitted from the individual user terminals, and the function of delivering the received TV pictures and sounds to user terminals other than the sources thereof, so that the user terminals each display the received TV pictures and sounds in combination.

**5.** (Amended) The multimedia information communication service system according to claim 3, wherein the bidirectional communication means has the function of receiving synthesis mode specification information for specifying a mode of synthesis of TV pictures and sounds to be delivered to the user terminals from a chairperson terminal selected arbitrarily from among the user terminals, and synthesizes and delivers the received TV pictures to the individual user terminals based on the received synthesis mode specification information.

**6.** (Amended) The multimedia information communication service system according to claim 4, wherein the bidirectional communication means has the function of receiving control information on the TV pictures and sounds of the user terminals from a chairperson terminal selected arbitrarily from among the user terminals, and delivers the received control information to the individual user terminals, so that the user terminals each display the received TV pictures and sounds in combination based on the received control information.

**7.** The multimedia information communication service system according to claim 3 or 5, wherein the bidirectional communication means has the function of detecting a user terminal from which a sound having an intensity beyond a predetermined level is received, and the function of highlighting the TV picture of the detected user terminal for synthesis.

**8.** The multimedia information communication service system according to any one of claims 1 to 7, wherein the bidirectional communication means has a data conference function of sharing an application to be performed on the user terminals.

**9.** The multimedia information communication service system according to any one of claims 1 to 8, wherein the bidirectional communication means has a chat function of realizing bidirectional communications between the user terminals by means of text entry.

**10.** The multimedia information communication service system according to any one of claims 1 to 9, wherein the bidirectional communication means has the function of acquiring band limitation information on the network, and the function of modifying a quality of information to be delivered based on the acquired band limitation information, so that the conversation function having a quality corresponding to a communication band of the network is maintained even when the communication band is limited.

**11.** (Amended) The multimedia information communication service system according to any one of claims 1 to 10, wherein the contents delivery means has the function of receiving a replay control signal for controlling contents replay from a chairperson terminal selected arbitrarily from among the user terminals, and the function of replaying and delivering contents based on the received replay control signal, so that the replay of the contents is controlled according to the progress of service.

**12.** The multimedia information communication service system according to any one of claims 1 to 11, wherein the contents delivery means has the function of linking external TV pictures and sounds, and the function of delivering the linked TV pictures and sounds as contents, thereby allowing a live link of the external TV pictures and sounds.

**18.** The multimedia information communication service system according to any one of claims 1 to 17, wherein some or all of the user terminals are connected over the Internet.

**19.** A program for use on a user terminal of the multimedia information communication service system according to any one of claims 1 to 18, comprising:
means for acquiring a TV picture and sound of the user terminal;
means for transmitting the acquired TV picture and sound to the bidirectional communication means;
means for receiving TV pictures and sounds from the bidirectional communication means;
means for receiving contents from the contents delivery means; and
means for creating a predetermined window to output the received TV pictures and sounds and the received contents, whereby
a conversation using TV pictures and sounds is held with another user terminal with delivered contents being viewed simultaneously.

**20.** A computer-readable recording medium recording the program according to claim 19 for use on a user terminal of the multimedia information communication service system.

**21.** (Added) The multimedia information communication service system according to any one of claims 1 to 14, further comprising accounting means for charging users for service charges, the accounting means having the function of summarizing the connect times of user terminals used by the users and conducting charging, the function of summarizing the connect time of a certain user terminal used by one other than the users and conducting charging, and the function of acquiring predetermined charge information on contents to be provided by the contents delivery means and conducting charging, whereby charging is performed in a combined fashion according to services provided.

## Amended claims

### Amended claims under Art. 34 PCT

**4.** The multimedia information communication service system according to claim 1 or 2, wherein the bidirectional communication means has the function of receiving the TV pictures and the sounds transmitted from the individual user terminals, and the function of delivering the received TV pictures and sounds to user terminals other than the sources thereof, so that the user terminals each display the received TV pictures and sounds in combination.

**5.** (Amended) The multimedia information communication service system according to claim 1 or 2, wherein the bidirectional communication means has: the function of setting a chairpersonship flag for granting chairpersonship to a certain user terminal; the function of receiving synthesis mode specification information for specifying a mode of synthesis of TV pictures and sounds from the user terminal designated by the chairpersonship flag; the function of receiving TV pictures and sounds transmitted from the individual user terminals; the function of synthesizing the TV pictures and sounds received from the individual user terminals based on the received synthesis mode specification information; and the function of delivering the synthesized TV pictures and sounds to the individual user terminals.

**6.** (Amended) The multimedia information communication service system according to claim 1 or 2, wherein the bidirectional communication means has: the function of setting a chairpersonship flag for granting chairpersonship to a certain user terminal; the function of receiving control information on TV pictures and sounds from the user terminal designated by the chairpersonship flag; the function of receiving TV pictures and sounds transmitted from the individual user terminals; and the function of delivering the received TV pictures and sounds to user terminals other than the sources thereof along with the received control information, and wherein
the user terminals each display the delivered TV pictures and sounds in combination based on the delivered control information.

**7.** The multimedia information communication service system according to claim 3 or 5, wherein the bidirectional communication means has the function of detecting a user terminal from which a sound having an intensity beyond a predetermined level is received, and the function of highlighting the TV picture of the detected user terminal for synthesis.

**8.** The multimedia information communication service system according to any one of claims 1 to 7, wherein the bidirectional communication means has a data conference function of sharing an application to be performed on the user terminals.

**9.** The multimedia information communication service system according to any one of claims 1 to 8, wherein the bidirectional communication means has a chat function of realizing bidirectional communications between the user terminals by means of text entry.

**10.** The multimedia information communication service system according to any one of claims 1 to 9, wherein the bidirectional communication means has the function of acquiring band limitation information on the network, and the function of modifying a quality of information to be delivered based on the acquired band limitation information, so that the conversation function having a quality corresponding to a communication band of the network is maintained even when the communication band is limited.

**11.** (Amended) The multimedia information communication service system according to any one of claims 1 to 10, wherein the contents delivery means has: the function of setting a chairpersonship flag for granting chairpersonship to a certain user terminal; the function of receiving a replay control signal for controlling contents replay from the user terminal designated by the chairpersonship flag; and the function of replaying and delivering contents based on the received replay control signal, and wherein
the replay of the contents is controlled according to the progress of service.

**12.** The multimedia information communication service system according to any one of claims 1 to 11, wherein the contents delivery means has the function of linking external TV pictures and sounds, and the function of delivering the linked TV pictures and sounds as contents, thereby allowing a live link of the external TV pictures and sounds.
